# EUROPEAN PATENT APPLICATION

(11) **EP 4 132 191 A1**
(43) Date of publication of application: **08.02.2023**
(21) Application number: 21774017.4
(22) Date of filing: 26.02.2021
(51) Int. Cl.: H04W 74/08, H04W 74/00, H04W 72/04, H04W 72/12, H04L 1/00

(54) **METHOD AND APPARATUS FOR URLLC IN UNLICENSED BAND**

(30) Priority: 24.03.2020 KR 20200035906; 27.03.2020 KR 20200037745; 07.08.2020 KR 20200099493; 21.08.2020 KR 20200105434; 04.09.2020 KR 20200113280; 20.10.2020 KR 20200136279; 16.11.2020 KR 20200153162; 18.01.2021 KR 20210006831
(71) Applicant: Electronics and Telecommunications Research Institute, Daejeon 34129 (KR)
(72) Inventor: MOON, Sung Hyun, Daejeon 35201 (KR); KIM, Cheol Soon, Daejeon 35202 (KR); LEE, Jung Hoon, Daejeon 34070 (KR)
(74) Representative: Betten & Resch
(86) International application number: PCT/KR2021/002505
(87) International publication number: WO 2021/194108

(57) **Abstract**

Disclosed are a method and an apparatus for a URLLC in an unlicensed band. An operation method of a terminal comprises the steps of: receiving, from a base station, first configuration information of first FFPs for channel access of the terminal and second configuration information of second FFPs for channel access of the base station; initiating a first COT in at least one first FFP among the first FFPs indicated by the first configuration information; and determining, according to a pre-defined rule, one COT between the first COT and a second COT which is initiated by the base station in at least one second FFP among the second FFPs.

## Description

### [Technical Field]

The present disclosure relates to a technique of transmitting and receiving signals in a communication system, and more specifically, to a technique of transmitting and receiving signals according to requirements of ultra reliable low latency communication (URLLC).

### [Background Art]

The communication system (hereinafter, new radio (NR) communication system) using a higher frequency band (e.g., a frequency band of 6 GHz or higher) than a frequency band (e.g., a frequency band lower below 6 GHz) of the long term evolution (LTE) (or, LTE-A) is being considered for processing of soaring wireless data. The NR communication system may support not only a frequency band below 6GHz but also 6GHz or higher frequency band, and may support various communication services and scenarios as compared to the LTE communication system. For example, usage scenarios of the NR communication system may include enhanced mobile broadband (eMBB), ultra-reliable low-latency communication (URLLC), massive machine type communication (mMTC), and the like. Communication technologies are needed to meet requirements of eMBB, URLLC, and mMTC.

Meanwhile, in order to process rapidly increasing wireless data, communication using an unlicensed band may be used. Currently, communication technologies using an unlicensed band include NR-Unlicensed (NR-U), LTE-Unlicensed (LTE-U), Licensed-Assisted-Access (LAA), MultiFire, or the like. The NR-U may support a standalone mode that provides communication services using only an unlicensed band. There is a need to improve a channel access method and a transmission method to effectively support the above-described usage scenarios (e.g., URLLC) in unlicensed band communication.

### [Disclosure]

### [Technical Problem]

An objective of the present disclosure for solving the above-described problem is directed to providing a method and an apparatus for transmitting and receiving uplink signals according to ultra reliable low latency communication (URLLC) requirements.

### [Technical Solution]

An operation method of a terminal according to a first exemplary embodiment of the present disclosure for achieving the objective may comprise: receiving, from a base station, first configuration information of first FFPs for channel access of the terminal and second configuration information of second FFPs for channel access of the base station; initiating a first COT in at least one first FFP among the first FFPs indicated by the first configuration information; determining one COT according to a predefined rule from among the first COT and a second COT initiated by the base station in at least one second FFP among the second FFPs; and transmitting an uplink signal to the base station in the one COT.

Here, a period in which the uplink signal is transmitted may be included in the first COT initiated by the terminal, and the uplink signal may be transmitted based on the first COT.

Here, the uplink signal may be included in the second COT initiated by the base station, and the first COT may overlap the second COT.

Here, the uplink signal may be a CG PUSCH, and the uplink signal may be allocated in a period excluding a first symbol in the first COT.

Here, the uplink signal may be one PUSCH constituting repetitive PUSCH transmission or one PUCCH constituting repetitive PUCCH transmission.

Here, the period in which the uplink signal is transmitted within the first COT may include an idle period of the at least one second FFP to which the second COT belongs.

Here, the predefined rule may include receiving DCI indicating the one COT from the base station or a rule negotiated in advance between the terminal and the base station.

Here, the first configuration information may include information indicating a first periodicity of the first FFPs, the second configuration information may include information indicating a second periodicity of the second FFPs, and the first periodicity may be an integer factor or an integer multiple of the second periodicity.

Here, the first configuration information may include a time offset for the first FFPs, the first FFPs may be periodically repeated, a position of the first FFPs may be determined by the time offset, and the time offset may be a number of symbols between a start time of a radio frame and a start time of one of the first FFPs.

Here, the number of symbols may be smaller than a number of symbols corresponding to the first periodicity of the first FFPs, and the number of symbols may be determined based on a numerology of a bandwidth part configured in a carrier.

Here, the first configuration information and the second configuration information may be included in an RRC message transmitted to the terminal.

An operation method of a base station according to a second exemplary embodiment of the present disclosure for achieving the objective may comprise: generating first configuration information of first FFPs for channel access of a terminal and second configuration information of second FFPs for channel access of the base station; transmitting the first configuration information and the second configuration information to the terminal; initiating a second COT in at least one second FFP among the second FFPs; and receiving an uplink signal from the terminal in one COT determined according to a predefined rule from among the second COT and a first COT initiated by the terminal in at least one first FFP among the first FFPs.

Here, a period in which the uplink signal is transmitted may be included in the first COT initiated by the terminal, and the uplink signal may be received based on the first COT.

Here, the uplink signal may be included in the second COT initiated by the base station, and the first COT may overlap the second COT.

Here, the uplink signal may be a CG PUSCH, and the uplink signal may be allocated in a period excluding a first symbol in the first COT.

Here, the uplink signal may be one PUSCH constituting repetitive PUSCH transmission or one PUCCH constituting repetitive PUCCH transmission.

Here, the predefined rule may include that the base station transmits DCI indicating the one COT to the terminal or a rule negotiated in advance between the terminal and the base station.

Here, the first configuration information may include information indicating a first periodicity of the first FFPs, the second configuration information may include information indicating a second periodicity of the second FFPs, and the first periodicity may be an integer factor or an integer multiple of the second periodicity.

Here, the first configuration information may include a time offset for the first FFPs, the first FFPs may be periodically repeated, a position of the first FFPs may be determined by the time offset, and the time offset may be a number of symbols between a start time of a radio frame and a start time of one of the first FFPs.

Here, the number of symbols may be smaller than a number of symbols corresponding to the first periodicity of the first FFPs, and the number of symbols may be determined based on a numerology of a bandwidth part configured in a carrier.

### [Advantageous Effects]

According to the present disclosure, a base station may allocate a physical uplink shared channel (PUSCH) resource in consideration of a downlink signal processing time. In this case, uncertainty of PUSCH transmission can be eliminated, and reliability of uplink transmission can be improved. In addition, a channel occupancy time (COT) of a first communication node (e.g., terminal) may be terminated early to ensure a channel sensing operation of a second communication node (e.g., base station). When a COT of the terminal overlaps a COT of the base station, uplink transmission may be performed in one COT determined according to a predefined rule. In this case, reliability of the uplink transmission can be improved, and performance of the communication system can be improved.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3A is a conceptual diagram illustrating a first exemplary embodiment of a communication method within a COT.
FIG. 3B is a conceptual diagram illustrating a second exemplary embodiment of a communication method within a COT.
FIG. 4 is a conceptual diagram illustrating a first exemplary embodiment of a FFP configuration method.
FIG. 5 is a conceptual diagram illustrating a first exemplary embodiment of a method for configuring an LBT subband and a guard band.
FIG. 6A is a conceptual diagram illustrating a first exemplary embodiment of a method for transmitting a PUSCH in a shared COT.
FIG. 6B is a conceptual diagram illustrating a second exemplary embodiment of a method for transmitting a PUSCH in a shared COT.
FIG. 6C is a conceptual diagram illustrating a third exemplary embodiment of a method for transmitting a PUSCH in a shared COT.
FIG. 6D is a conceptual diagram illustrating a fourth exemplary embodiment of a method for transmitting a PUSCH in a shared COT.
FIG. 7 is a conceptual diagram illustrating exemplary embodiments of a method for repeatedly transmitting a PUSCH in a shared COT.
FIG. 8 is a conceptual diagram illustrating a first exemplary embodiment of a method for uplink transmission near an FFP boundary.
FIG. 9 is a conceptual diagram illustrating a second exemplary embodiment of a method for uplink transmission near an FFP boundary.
FIG. 10 is a conceptual diagram illustrating exemplary embodiments of an uplink FFP initiation method of a terminal.
FIG. 11A is a conceptual diagram illustrating a first exemplary embodiment of a method for configuring a downlink FFP and an uplink FFP.
FIG. 11B is a conceptual diagram illustrating a second exemplary embodiment of a method for configuring a downlink FFP and an uplink FFP.
FIG. 12 is a conceptual diagram illustrating a third exemplary embodiment of a method for uplink transmission near an FFP boundary.
FIG. 13 is a conceptual diagram illustrating a first exemplary embodiment of a channel access method when a downlink FFP and an uplink FFP coexist.
FIG. 14 is a conceptual diagram illustrating a second exemplary embodiment of a channel access method when a downlink FFP and an uplink FFP coexist.
FIG. 15 is a conceptual diagram illustrating exemplary embodiments of an uplink transmission method when a downlink FFP and an uplink FFP coexist.
FIG. 16 is a conceptual diagram illustrating a third exemplary embodiment of a channel access method when a downlink FFP and an uplink FFP coexist.
FIG. 17A is a conceptual diagram illustrating a first exemplary embodiment of a signal transmission method in an idle period.
FIG. 17B is a conceptual diagram illustrating a second exemplary embodiment of a signal transmission method in an idle period.
FIG. 18 is a conceptual diagram illustrating a first exemplary embodiment of a channel access method using a plurality of channels.
FIG. 19 is a conceptual diagram illustrating a first exemplary embodiment of a method for configuring a guard band.

### [Modes of the Invention]

While the present disclosure is susceptible to various modifications and alternative forms, specific embodiments are shown by way of example in the drawings and described in detail. It should be understood, however, that the description is not intended to limit the present disclosure to the specific embodiments, but, on the contrary, the present disclosure is to cover all modifications, equivalents, and alternatives that fall within the spirit and scope of the present disclosure.

Although the terms "first," "second," etc. may be used herein in reference to various elements, such elements should not be construed as limited by these terms. These terms are only used to distinguish one element from another. For example, a first element could be termed a second element, and a second element could be termed a first element, without departing from the scope of the present disclosure. The term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directed coupled" to another element, there are no intervening elements.

The terminology used herein is for the purpose of describing particular embodiments only and is not intended to be limiting of embodiments of the present disclosure. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, parts, and/or combinations thereof, but do not preclude the presence or addition of one or more other features, integers, steps, operations, elements, parts, and/or combinations thereof.

Unless otherwise defined, all terms (including technical and scientific terms) used herein have the same meaning as commonly understood by those of ordinary skill in the art to which the present disclosure pertains. It will be further understood that terms defined in commonly used dictionaries should be interpreted as having a meaning that is consistent with their meaning in the context of the related art and will not be interpreted in an idealized or overly formal sense unless expressly so defined herein.

Hereinafter, preferred exemplary embodiments of the present disclosure will be described in detail with reference to the accompanying drawings. In describing the present disclosure, to facilitate the entire understanding, like numbers refer to like elements throughout the description of the figures and the repetitive description thereof will be omitted.

A communication system to which exemplary embodiments according to the present disclosure are applied will be described. The communication system may be the 4G communication system (e.g., Long-Term Evolution (LTE) communication system or LTE-A communication system), the 5G communication system (e.g., New Radio (NR) communication system), or the like. The 4G communication system may support communications in a frequency band of 6 GHz or below, and the 5G communication system may support communications in a frequency band of 6 GHz or above as well as the frequency band of 6 GHz or below. The communication system to which the exemplary embodiments according to the present disclosure are applied is not limited to the contents described below, and the exemplary embodiments according to the present disclosure may be applied to various communication systems. Here, the communication system may be used in the same sense as a communication network, `LTE' may refer to `4G communication system', `LTE communication system', or `LTE-A communication system', and 'NR' may refer to `SG communication system' or `NR communication system'.

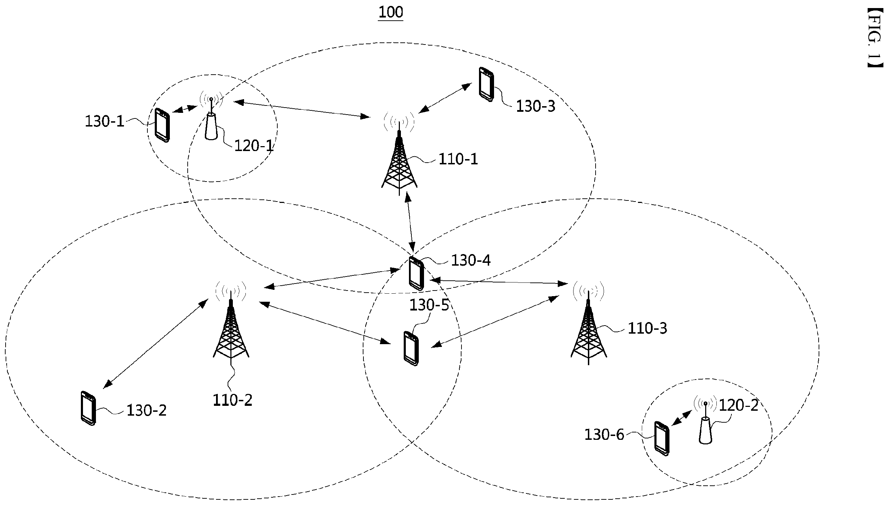

FIG. 1 is a conceptual diagram illustrating a first exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. Also, the communication system 100 may further comprise a core network (e.g., a serving gateway (S-GW), a packet data network (PDN) gateway (P-GW), and a mobility management entity (MME)). When the communication system 100 is a 5G communication system (e.g., New Radio (NR) system), the core network may include an access and mobility management function (AMF), a user plane function (UPF), a session management function (SMF), and the like.

The plurality of communication nodes 110 to 130 may support communication protocols defined in the 3rd generation partnership project (3GPP) technical specifications (e.g., LTE communication protocol, LTE-A communication protocol, NR communication protocol, or the like). The plurality of communication nodes 110 to 130 may support code division multiple access (CDMA) based communication protocol, wideband CDMA (WCDMA) based communication protocol, time division multiple access (TDMA) based communication protocol, frequency division multiple access (FDMA) based communication protocol, orthogonal frequency division multiplexing (OFDM) based communication protocol, filtered OFDM based communication protocol, cyclic prefix OFDM (CP-OFDM) based communication protocol, discrete Fourier transform-spread-OFDM (DFT-s-OFDM) based communication protocol, orthogonal frequency division multiple access (OFDMA) based communication protocol, single carrier FDMA (SC-FDMA) based communication protocol, non-orthogonal multiple access (NOMA) based communication protocol, generalized frequency division multiplexing (GFDM) based communication protocol, filter band multi-carrier (FBMC) based communication protocol, universal filtered multi-carrier (UFMC) based communication protocol, space division multiple access (SDMA) based communication protocol, or the like. Each of the plurality of communication nodes may have the following structure.

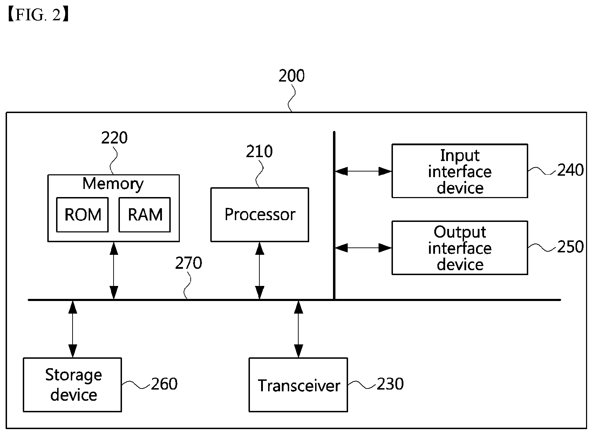

FIG. 2 is a block diagram illustrating a first exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring back to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to the cell coverage of the first base station 110-1. Also, the second terminal 130-2, the fourth terminal 130-4, and the fifth terminal 130-5 may belong to the cell coverage of the second base station 110-2. Also, the fifth base station 120-2, the fourth terminal 130-4, the fifth terminal 130-5, and the sixth terminal 130-6 may belong to the cell coverage of the third base station 110-3. Also, the first terminal 130-1 may belong to the cell coverage of the fourth base station 120-1, and the sixth terminal 130-6 may belong to the cell coverage of the fifth base station 120-2.

Here, each of the plurality of base stations 110-1, 110-2, 110-3, 120-1, and 120-2 may be referred to as NodeB (NB), evolved NodeB (eNB), gNB, advanced base station (ABS), high reliability-base station (HR-BS), base transceiver station (BTS), radio base station, radio transceiver, access point (AP), access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may be referred to as user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul link or a non-ideal backhaul link, and exchange information with each other via the ideal or non-ideal backhaul. Also, each of the plurality of base stations 110-1, 110-2, 110-3, 120-1, and 120-2 may be connected to the core network through the ideal backhaul link or non-ideal backhaul link. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g., single-user MIMO (SU-MIMO), multi-user MIMO (MU-MIMO), massive MIMO, or the like), a coordinated multipoint (CoMP) transmission, a carrier aggregation (CA) transmission, a transmission in unlicensed band, a device-to-device (D2D) communication (or, proximity services (ProSe)), an Internet of Things (IoT) communication, a dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e., the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

Each of the first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

Methods of transmitting and receiving signals in a communication system will be described. In particular, channel occupation methods, signal transmission methods, and channel occupation-related information transmission methods of a communication node (e.g., base station and/or terminal), for improving transmission reliability and delay time in a wireless communication system supporting communication in an unlicensed band, will be described. The following exemplary embodiments may be applied not only to an NR communication system but also to other communication systems (e.g., LTE communication system, fifth generation (5G) communication system, sixth generation (6G) communication system, or the like).

The NR communication system may support a wider system bandwidth (e.g., carrier bandwidth) than a system bandwidth provided by the LTE communication system in order to efficiently use a wide frequency band. For example, the maximum system bandwidth supported by the LTE communication system may be 20 MHz. On the other hand, the NR communication system may support a carrier bandwidth of up to 100 MHz in the frequency band of 6 GHz or below, and support a carrier bandwidth of up to 400 MHz in the frequency band of 6 GHz or above.

A numerology applied to physical signals and channels in the communication system (e.g., NR communication system) may be variable. The numerology may vary to satisfy various technical requirements of the communication system. In the communication system to which a cyclic prefix (CP) based OFDM waveform technology is applied, the numerology may include a subcarrier spacing and a CP length (or CP type). Table 1 below may be a first exemplary embodiment of configuration of numerologies for the CP-based OFDM. The subcarrier spacings may have an exponential multiplication relationship of 2, and the CP length may be scaled at the same ratio as the OFDM symbol length. Depending on a frequency band in which the communication system operates, at least some numerologies among the numerologies of Table 1 may be supported. In addition, in the communication system, numerolog(ies) not listed in Table 1 may be further supported. CP type(s) not listed in Table 1 (e.g., extended CP) may be additionally supported for a specific subcarrier spacing (e.g., 60 kHz).

**[Table 1]**

| Subcarrier spacing | 15kHz | 30kHz | 60kHz | 120kHz | 240kHz | 480kHz |
|---|---|---|---|---|---|---|
| OFDM symbol length [µs] | 66.7 | 33.3 | 16.7 | 8.3 | 4.2 | 2.1 |
| CP length [µs] | 4.76 | 2.38 | 1.19 | 0.60 | 0.30 | 0.15 |
| Number of OFDM symbols within 1ms | 14 | 28 | 56 | 112 | 224 | 448 |

In the following description, a frame structure in the communication system will be described. In the time domain, elements constituting a frame structure may include a subframe, slot, mini-slot, symbol, and the like. The subframe may be used as a unit for transmission, measurement, and the like, and the length of the subframe may have a fixed value (e.g., 1 ms) regardless of a subcarrier spacing. A slot may comprise consecutive symbols (e.g., 14 OFDM symbols). The length of the slot may be variable differently from the length of the subframe. For example, the length of the slot may be inversely proportional to the subcarrier spacing.

A slot may be used as a unit for transmission, measurement, scheduling, resource configuration, timing (e.g., scheduling timing, hybrid automatic repeat request (HARQ) timing, channel state information (CSI) measurement and reporting timing, etc.), and the like. A length of an actual time resource used for transmission, measurement, scheduling, resource configuration, etc. may not match the length of a slot. A mini-slot may include consecutive symbol(s), and a length of a mini-slot may be shorter than a length of a slot. A mini-slot may be used as a unit for transmission, measurement, scheduling, resource configuration, timing, and the like. A mini-slot (e.g., the length of a mini-slot, a mini-slot boundary, etc.) may be predefined in the technical specification. Alternatively, a mini-slot (e.g., a length of a mini-slot, a mini-slot boundary, etc.) may be configured (or indicated) to the terminal. When a specific condition is satisfied, use of a mini-slot may be configured (or indicated) to the terminal.

The base station may schedule a data channel (e.g., physical downlink shared channel (PDSCH), physical uplink shared channel (PUSCH), physical sidelink shared channel (PSSCH)) using some or all of symbols constituting a slot. In particular, for URLLC transmission, unlicensed band transmission, transmission in a situation where an NR communication system and an LTE communication system coexist, and multi-user scheduling based on analog beamforming, a data channel may be transmitted using a portion of a slot. In addition, the base station may schedule a data channel using a plurality of slots. In addition, the base station may schedule a data channel using at least one mini-slot.

In the frequency domain, elements constituting the frame structure may include a resource block (RB), subcarrier, and the like. One RB may include consecutive subcarriers (e.g., 12 subcarriers). The number of subcarriers constituting one RB may be constant regardless of a numerology. In this case, a bandwidth occupied by one RB may be proportional to a subcarrier spacing of a numerology. An RB may be used as a transmission and resource allocation unit for a data channel, control channel, and the like. Resource allocation of a data channel may be performed in units of RBs or RB groups (e.g., resource block group (RBG)). One RBG may include one or more consecutive RBs. Resource allocation of a control channel may be performed in units of control channel elements (CCEs). One CCE in the frequency domain may include one or more RBs.

In the NR communication system, a slot (e.g., slot format) may be composed of a combination of one or more of downlink period, flexible period (or unknown period), and an uplink period. Each of a downlink period, flexible period, and uplink period may be comprised of one or more consecutive symbols. A flexible period may be located between a downlink period and an uplink period, between a first downlink period and a second downlink period, or between a first uplink period and a second uplink period. When a flexible period is inserted between a downlink period and an uplink period, the flexible period may be used as a guard period.

A slot may include one or more flexible periods. Alternatively, a slot may not include a flexible period. The terminal may perform a predefined operation in a flexible period. Alternatively, the terminal may perform an operation configured by the base station semi-statically or periodically. For example, the operation configured by the base station periodically may include a PDCCH monitoring operation, synchronization signal/physical broadcast channel (SS/PBCH) block reception and measurement operation, channel state information-reference signal (CSI-RS) reception and measurement operation, downlink semi-persistent scheduling (SPS) PDSCH reception operation, sounding reference signal (SRS) transmission operation, physical random access channel (PRACH) transmission operation, periodically-configured PUCCH transmission operation, PUSCH transmission operation according to a configured grant, and the like. When a flexible symbol is overridden by a downlink or uplink symbol, the terminal may perform a new operation instead of the existing operation in the corresponding flexible symbol (e.g., overridden flexible symbol).

A slot format may be configured semi-statically by higher layer signaling (e.g., radio resource control (RRC) signaling). Information indicating a semi-static slot format may be included in system information, and the semi-static slot format may be configured in a cell-specific manner. In addition, a semi-static slot format may be additionally configured for each terminal through terminal-specific higher layer signaling (e.g., RRC signaling). A flexible symbol of a slot format configured cell-specifically may be overridden by a downlink symbol or an uplink symbol by terminal-specific higher layer signaling. In addition, a slot format may be dynamically indicated by physical layer signaling (e.g., slot format indicator (SFI) included in downlink control information (DCI)). The semi-statically configured slot format may be overridden by a dynamically indicated slot format. For example, a semi-static flexible symbol may be overridden by a downlink symbol or an uplink symbol by SFI.

The terminal may perform downlink operations, uplink operations, and sidelink operations in a bandwidth part. A bandwidth part may be defined as a set of consecutive RBs (e.g., physical resource blocks (PRBs)) having a specific numerology in the frequency domain. Only one numerology may be used for transmission of signals (e.g., transmission of control channel or data channel) in one bandwidth part. In exemplary embodiments, when used in a broad sense, a 'signal' may refer to any physical signal and channel. A terminal performing an initial access procedure may obtain configuration information of an initial bandwidth part from the base station through system information. A terminal operating in an RRC connected state may obtain the configuration information of the bandwidth part from the base station through terminal-specific higher layer signaling.

The configuration information of the bandwidth part may include a numerology (e.g., a subcarrier spacing and a CP length) applied to the bandwidth part. Also, the configuration information of the bandwidth part may further include information indicating a position of a start RB (e.g., start PRB) of the bandwidth part and information indicating the number of RBs (e.g., PRBs) constituting the bandwidth part. At least one bandwidth part among the bandwidth part(s) configured in the terminal may be activated. For example, within one carrier, one uplink bandwidth part and one downlink bandwidth part may be activated respectively. In a time division duplex (TDD) based communication system, a pair of an uplink bandwidth part and a downlink bandwidth part may be activated. The base station may configure a plurality of bandwidth parts to the terminal within one carrier, and may switch the active bandwidth part of the terminal.

In exemplary embodiments, an expression `a frequency band (e.g., carrier, bandwidth part, listen before talk (LBT) subband, guard band, etc.) is activated' may mean that the frequency band is in a state in which a base station or terminal can transmit or receive a signal by using the corresponding frequency band. In addition, an expression `a frequency band is activated' may mean that the frequency band is in a state in which a radio frequency (RF) filter (e.g., band pass filter) of a transceiver is operating in a frequency band including the corresponding frequency band (e.g., active frequency band).

In exemplary embodiments, an RB may mean a common RB (CRB). Alternatively, an RB may mean a PRB or a virtual RB (VRB). In the NR communication system, a CRB may refer to an RB constituting a set of consecutive RBs (e.g., common RB grid) based on a reference frequency (e.g., point A). Carriers, bandwidth part, and the like may be arranged on the common RB grid. That is, a carrier, bandwidth part, etc. may be composed of CRB(s). An RB or CRB constituting a bandwidth part may be referred to as a PRB, and a CRB index within the bandwidth part may be appropriately converted into a PRB index. In an exemplary embodiment, an RB may mean an interlace RB (IRB). The IRB will be described later.

A PDCCH may be used to transmit DCI or a DCI format to the terminal. A minimum resource unit constituting a PDCCH may be a resource element group (REG). An REG may be composed of one PRB (e.g., 12 subcarriers) in the frequency domain and one OFDM symbol in the time domain. Thus, one REG may include 12 resource elements (REs). A demodulation reference signal (DMRS) for demodulating a PDCCH may be mapped to 3 REs among 12 REs constituting the REG, and control information (e.g., modulated DCI) may be mapped to the remaining 9 REs.

One PDCCH candidate may be composed of one CCE or aggregated CCEs. One CCE may be composed of a plurality of REGs. The NR communication system may support CCE aggregation levels 1, 2, 4, 8, 16, and the like, and one CCE may consist of six REGs.

A control resource set (CORESET) may be a resource region in which the terminal performs a blind decoding on PDCCHs. The CORESET may be composed of a plurality of REGs. The CORESET may consist of one or more PRBs in the frequency domain and one or more symbols (e.g., OFDM symbols) in the time domain. The symbols constituting one CORESET may be consecutive in the time domain. The PRBs constituting one CORESET may be consecutive or non-consecutive in the frequency domain. One DCI (e.g., one DCI format or one PDCCH) may be transmitted within one CORESET. A plurality of CORESETs may be configured with respect to a cell and a terminal, and the plurality of CORESETs may overlap in time-frequency resources.

A CORESET may be configured in the terminal by a PBCH (e.g., system information transmitted through the PBCH). The identifier (ID) of the CORESET configured by the PBCH may be 0. That is, the CORESET configured by the PBCH may be referred to as a CORESET #0. A terminal operating in an RRC idle state may perform a monitoring operation in the CORESET #0 in order to receive a first PDCCH in the initial access procedure. Not only terminals operating in the RRC idle state but also terminals operating in the RRC connected state may perform monitoring operations in the CORESET #0. The CORESET may be configured in the terminal by other system information (e.g., system information block type 1 (SIB1)) other than the system information transmitted through the PBCH. For example, for reception of a random access response (or Msg2) in a random access procedure, the terminal may receive the SIB 1 including the configuration information of the CORESET. Also, the CORESET may be configured in the terminal by terminal-specific higher layer signaling (e.g., RRC signaling).

In each downlink bandwidth part, one or more CORESETs may be configured for the terminal. Here, an expression `a CORESET is configured in a bandwidth part' may mean that the CORESET is logically associated with the bandwidth part and the terminal monitors the corresponding CORESET in the bandwidth part. The initial downlink active bandwidth part may include the CORESET #0 and may be associated with the CORESET #0. The CORESET #0 having a quasi-co-location (QCL) relation with an SS/PBCH block may be configured for the terminal in a primary cell (PCell), a secondary cell (SCell), and a primary secondary cell (PSCell). In the secondary cell (SCell), the CORESET #0 may not be configured for the terminal.

A search space may be a set of candidate resource regions through which PDCCHs can be transmitted. The terminal may perform a blind decoding on each of the PDCCH candidates within a predefined search space. The terminal may determine whether a PDCCH is transmitted to itself by performing a cyclic redundancy check (CRC) on a result of the blind decoding. When it is determined that a PDCCH is a PDCCH for the terminal itself, the terminal may receive the PDCCH.

A PDCCH candidate may be configured with CCEs selected by a predefined hash function within an occasion of the CORESET or the search space. The search space may be defined and configured for each CCE aggregation level. In this case, a set of search spaces for all CCE aggregation levels may be referred to as a `search space set'. In exemplary embodiments, 'search space' may mean `search space set', and `search space set' may mean `search space'.

A search space set may be logically associated with one CORESET. One CORESET may be logically associated with one or more search space sets. A common search space set configured through the PBCH may be used to monitor a DCI scheduling a PDSCH for transmission of the SIB1. The ID of the common search space set configured through the PBCH may be set to 0. That is, the common search space set configured through the PBCH may be defined as a type 0 PDCCH common search space set or a search space set #0. The search space set #0 may be logically associated with the CORESET #0.

The search space set may be classified into a common search space set and a terminal-specific (i.e., UE-specific) search space set. A common DCI may be transmitted in the common search space set, and a terminal-specific DCI may be transmitted in the terminal-specific search space set. Considering degree of freedom in scheduling and/or fallback transmission, a terminal-specific DCI may also be transmitted in the common search space set. For example, the common DCI may include resource allocation information of a PDSCH for transmission of system information, paging, power control commands, slot format indicator (SFI), preemption indicator, and the like. The terminal-specific DCI may include PDSCH resource allocation information, PUSCH resource allocation information, and the like. A plurality of DCI formats may be defined according to the payload and the size of the DCI, the type of radio network temporary identifier (RNTI), or the like.

In exemplary embodiments, the common search space may be referred to as 'CSS', and the common search space set may be referred to as `CSS set'. Also, in exemplary embodiments, the terminal-specific search space may be referred to as `USS', and the terminal-specific search space set may be referred to as `USS set'.

Exemplary embodiments may be applied to various communication scenarios using an unlicensed band. For example, with assistance of a primary cell in a licensed band, a cell in an unlicensed band may be configured as a secondary cell, and a carrier in the secondary cell may be aggregated with another carrier. Alternatively, a cell in an unlicensed cell (e.g., secondary cell) and a cell in a licensed band (e.g., primary cell) may support dual connectivity operations. Accordingly, the transmission capacity can be increased. A cell in an unlicensed band may independently perform functions of a primary cell. A downlink carrier of a licensed band may be combined with an uplink carrier of an unlicensed band, and the combined carriers may perform functions as one cell. On the other hand, an uplink carrier of a licensed band may be combined with a downlink carrier of an unlicensed band, and the combined carriers may perform functions as one cell. In addition, exemplary embodiments may be applied to other communication system (e.g., communication system supporting a licensed band) as well as a communication system supporting an unlicensed band.

In communication of an unlicensed band, a contention-based channel access scheme may be used to provide fair channel use opportunities to communication nodes, and related spectrum regulation conditions may be defined. For example, a transmitting node (e.g., communication node performing a transmission operation) may identify whether a channel is in a busy state or an idle state by performing a clear channel assessment (CCA) operation. When the channel is in the idle state, the transmitting node may transmit a signal by occupying the corresponding channel for a predetermined time period, the predetermined time period may be referred to as a channel occupancy time (COT). On the other hand, when the channel is in the busy state, the transmitting node may continue to perform the CCA operation. The transmitting node may measure a strength of a received signal in a channel sensing period, and may determine an occupancy state of the channel by comparing the measured strength of the received signal with a threshold. For example, the threshold may be an energy detection threshold. The threshold may be predefined in the technical specification. Alternatively, the threshold may be configured to the terminal from the base station. The above-described operation may be referred to as an LBT operation.

The LBT operation may be performed in various schemes depending on presence and absence of CCA and a scheme of the CCA. For example, a communication node may transmit a signal without performing CCA. This operation may be referred to as a first category LBT. For another example, a communication node may perform CCA in a sensing period having a predefined length, and may transmit a signal after the sensing period according to a result of performing the CCA. Specifically, a communication node may sense a channel in at least a portion (e.g., at least one sensing slot) of the sensing period, and when a time during which a signal having a reception strength equal to or less than a threshold is received is equal to or greater than a reference time (e.g., 4 µs), the communication node may determine that the channel is in the idle state. For example, the length of the sensing period may be 25 µs, 16 µs, 9 µs, or the like. The above-described operation may be referred to as a second category LBT. In addition, since the above-described operation includes one CCA, it may be referred to as `one-shot LBT'.

Meanwhile, the length of the sensing period may be variable. A communication node may perform CCA in an initial sensing period, and when the channel is in the idle state, the communication node may transmit a signal after the sensing period. On the other hand, when the channel is in the busy state, the communication node may extend the sensing period and perform an additional sensing operation in the extended sensing period. The sensing period may be extended by a random back-off scheme, and the length of the extended sensing period may be proportional to a random back-off value. The random backoff value may be determined within a contention window (CW). For example, when the random backoff value and the size of the contention window are Nᵢₙᵢₜ and CWₚ, respectively, Nᵢₙᵢₜ may be selected as an arbitrary value between 0 and CWₚ. Each of Nᵢₙᵢₜ and CWₚ may be an integer.

For example, the communication node may additionally perform CCA in a consecutive defer period extended by Nᵢₙᵢₜ, and may transmit a signal after the sensing period when the channel is in the idle state in all sensing slots (e.g., entire sensing period). In addition, the communication node may perform a self-defer operation when a completion time of the sensing operation (e.g., a time when a backoff counter value becomes 0) and a time at which a signal is to be transmitted do not match, perform an additional sensing operation before transmission of the signal, and may transmit the signal according to a result of the additional sensing operation. In the above-described LBT operation, the initial sensing operation may be omitted. The above-described operation may be referred to as a third category LBT or a fourth category LBT. In case of the third category LBT, the size of the contention window may be fixed. In case of the fourth category LBT, the size of the contention window may be adjusted according to a predetermined procedure. For example, the size of the contention window may be changed by a type of the signal to be transmitted, channel access priority class (CAPC), frequency regulation, whether a previous transmission is successful or not (e.g., HARQ-ACK reception), or the like.

In the NR communication system or the LTE communication system, the above-described LBT operation schemes may be applied to a channel access procedure for load based equipment (LBE). For example, the first category LBT may be applied to a type 2C channel access procedure. The second category LBT may be applied to type 2A and type 2B channel access procedures. The fourth category LBT may be applied to a type 1 channel access procedure. In addition, the above-described LBT operation schemes may be applied to a channel access procedure for frame based equipment (FBE). The LBE and FBE operation schemes will be described later.

An expression `a communication node initiates or secures a COT or a channel occupancy (CO)' may mean 'the communication node occupies a channel(s) by succeeding in an LBT operation'. An expression `a communication node transmits a signal in a COT or CO' may mean 'the communication node transmits the signal within a predetermined time period on an occupied channel(s)'. Here, the CO may mean the channel(s) occupied by the communication node or transmission(s) on the channel(s) occupied by the communication node. Alternatively, the CO may mean a set of the channel(s) occupied by the communication node and a time period occupied by the communication node. In exemplary embodiments, the CO and COT may be used in the same sense. In exemplary embodiments, a node (e.g., initiating node) that started or initiated a COT may be referred to as a `transmitting node', and a node that transmits and receives a signal in a COT without starting or initiating the COT may be referred to as a `receiving node'. The COT may be shared from the transmitted node to the receiving node. The receiving node may perform a transmission operation as well as a reception operation in the shared COT. Accordingly, the transmitting node may perform not only a transmission operation but also a reception operation in the shared COT.

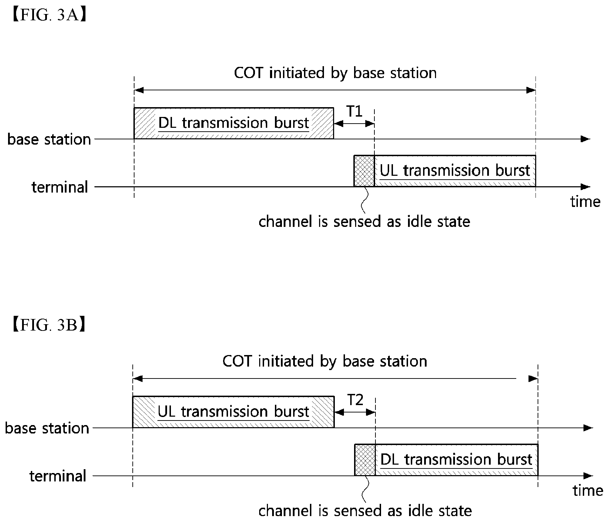

FIG. 3A is a conceptual diagram illustrating a first exemplary embodiment of a communication method within a COT, and FIG. 3B is a conceptual diagram illustrating a second exemplary embodiment of a communication method within a COT.

Referring to FIG. 3A, a base station (e.g., gNB) may initiate a COT by performing an LBT operation. The base station may transmit a downlink transmission burst (i.e., Tx burst) at a start part of the COT. In addition, the COT initiated by the base station may be shared with the terminal. The terminal may transmit an uplink transmission burst within the shared COT. In this case, the terminal may perform an LBT operation for transmission of the uplink transmission burst. For example, the terminal may perform CCA before the uplink transmission burst. Alternatively, the terminal may transmit the uplink transmission burst without performing CCA. The terminal may obtain information required for the LBT operation (e.g., whether or not CCA is performed, LBT category, a length of a sensing period, etc.) through a predefined rule and/or a signaling procedure from the base station. The CCA operation of the terminal may be performed within a period T1. T1 may be a time interval between an end time of a previous transmission burst (e.g., downlink transmission burst) and a start time of the uplink transmission burst.

A downlink transmission burst may be a set of consecutive downlink signals and/or channels in the time domain. An uplink transmission burst may be a set of consecutive uplink signals and/or channels in the time domain. The expression `signals and/or channels constituting a transmission burst (e.g., downlink and/or uplink transmission burst) are consecutive in the time domain' means `a gap between the signal and/or channel transmissions is equal to or less than a reference value'. The reference value may be predefined in the technical specification. For example, the reference value may be 0. For another example, the reference value may be a value greater than 0 (e.g., 16 µs).

Referring to FIG. 3B, a terminal may acquire a COT by performing an LBT operation. The terminal may transmit an uplink transmission burst at a start part of the COT. In addition, the COT initiated by the terminal may be shared with the base station. The base station may transmit a downlink transmission burst within the shared COT. In this case, the base station may perform an LBT operation for transmission of the downlink transmission burst. For example, the base station may perform CCA before the downlink transmission burst. Alternatively, the base station may transmit the downlink transmission burst without performing CCA. The CCA operation of the base station may be performed within a period T2. The base station may obtain information required for the LBT operation (e.g., whether or not CCA is performed, LBT category, a length of a sensing period, etc.) through a predefined rule. T2 may be a time interval between an end time of a previous transmission burst (e.g., uplink transmission burst) and a start time of the downlink transmission burst.

A maximum occupancy time (or maximum transmission possible time of a signal) of a channel according to a CCA operation may be defined as a maximum COT (MCOT). In exemplary embodiments, a maximum occupancy time of a channel according to a CCA operation performed by a base station may be referred to as a 'downlink MCOT', and a maximum occupancy time of a channel according to a CCA operation performed by a terminal is may be referred to as an `uplink MCOT'. Therefore, a COT initiated by a base station may not exceed the downlink MCOT, and a COT initiated by a terminal may not exceed the uplink MCOT. The downlink MCOT and the uplink MCOT may be predefined in the technical specification according to frequency regulation, channel access priority class, or the like. The terminal may receive configuration information of the uplink MCOT from the base station. Alternatively, the downlink MCOT and the uplink MCOT may be determined by configuration information from the base station. For example, the configuration information may include information on a fixed frame period (FFP), which will be described later.

The transmitting node (or receiving node) may inform the receiving node (or transmitting node) of information on a COT (e.g., COT configuration information) acquired by itself through a signaling procedure (e.g., DCI signaling, uplink control information (UCI) signaling, medium access control (MAC) control element (CE) signaling, RRC signaling, etc.). The COT configuration information (or COT indication information) may include a start time of the COT, an end time of the COT, and/or a duration of the COT (e.g., the length of the COT). The COT configuration information notified by the transmitting node (or receiving node) to the receiving node (or transmitting node) may be different from information on the COT actually acquired by the transmitting node. The COT configuration information may be dynamically or semi-statically configured (or indicated). Alternatively, the COT configuration information may be predefined, and the predefined configuration information may be shared between the communication nodes in advance.

For example, the base station may inform the terminal of configuration information of a COT initiated by the base station. In this case, a specific operation of the terminal may depend on the COT configuration information obtained from the base station. For example, when the COT configuration information is received from the base station, the terminal may change an LBT operation for uplink transmission within the COT indicated by the configuration information (e.g., from the fourth category LBT to the second category LBT), and perform the changed LBT operation. For another example, a PDCCH monitoring operation of the terminal within the COT indicated by the base station may be different from a PDCCH monitoring operation outside the COT indicated by the base station. For another example, a CSI-RS reception and measurement operation of the terminal within the COT indicated by the base station may be different from a CSI-RS reception and measurement operation outside the COT indicated by the base station. Conversely, the terminal may inform the base station of configuration information of a COT initiated by the terminal. In this case, a specific operation of the base station may depend on the COT configuration information received from the terminal. For example, a transmission operation of the base station within the COT shared between the base station and the terminal may be determined based on the configuration information of the shared COT.

Meanwhile, communication devices (e.g., communication nodes, base stations, and terminals) performing LBT operations in an unlicensed band may be classified into LBEs and FBEs. In addition, a channel access procedure of an unlicensed band may be performed based on an LBE operation scheme and/or an FBE operation scheme. When the LBE operation scheme is used, a communication node may perform a sensing operation for channel access at a time it desires. That is, the sensing operation may be performed in an on-demand manner. For example, the communication node may dynamically perform a channel access operation according to traffic generation. On the other hand, when the FBE operation scheme is used, a communication node may perform a sensing operation for channel access at a time that is periodically repeated. For example, an FFP may be periodically repeated, and a sensing operation may be performed in a specific period of each FFP (e.g., idle period within the FFP).

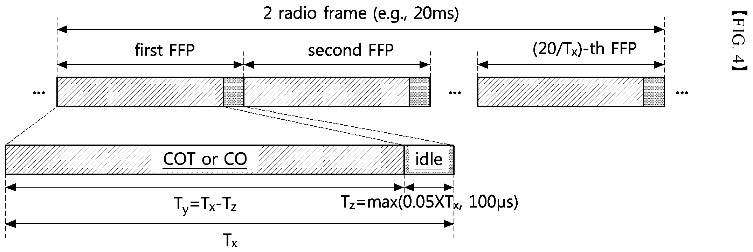

FIG. 4 is a conceptual diagram illustrating a first exemplary embodiment of a FFP configuration method.

Referring to FIG. 4, an FFP may include a COT and an idle period. The duration of the FFP may be referred to as Tₓ, the COT (or CO) having a length of T_{y} may be arrange in the front part of the FFP, and the idle period having a length of T_{z} may be arrange in the rear part of the FFP. Each of Tₓ, T_{y}, and T_{z} may be positive numbers. The sum of T_{y} and T_{z} may be Tₓ. Here, the COT may mean a MCOT. That is, the duration of the MCOT may be T_{y}, and a COT actually occupied by the communication node may be shorter than T_{y}. The length of the idle period may occupy Z% of the FFP. For example, Z=5. The minimum value of the length of the idle period may be defined. For example, the minimum value of the length of the idle period may be 100 µs. In this case, T_{z} may be max (0.05×Tₓ, 100 µs). The FFP may appear periodically and repeatedly, and (20/Tₓ) FFPs may be arranged within two consecutive radio frames (e.g., 20 ms period).

A communication node (e.g., base station) may determine the FFP. In addition, the communication node (e.g., base station) may change the FFP. The determined FFP or changed FFP may last for at least a certain time period. That is, a minimum change period of the FFP may be defined. In addition, the communication node (e.g., base station) may transmit the FFP or configuration information on the FFP to another communication node (e.g., terminal), and another communication node (e.g., terminal) may determine an FFP based on the FFP and the configuration information on the FFP, and perform a transmission operation and/or a channel access operation with a communication node (e.g., base station) in a channel within the determined FFP.

When a sensing operation succeeds in an idle period before an FFP (e.g., when a channel is determined to be in the idle state), the communication node may transmit a signal within a COT of the corresponding FFP. On the other hand, if the sensing operation fails in an idle period before an FFP (e.g., when the channel is determined to be in the busy state), the communication node may not perform a channel occupation operation and/or a signal transmission operation within a COT of the corresponding FFP. In this case, the communication node may attempt CCA for a next FFP in the idle period of the FFP.

The LBT operation performed by FBE in an idle period or a gap period (e.g., gap period within a COT) may be an `LBT operation by the second category' or an `operation (e.g., one-shot LBT) similar to the LBT operation by the second category'. For example, the FBE may perform an energy detection operation during a slot duration having a length of at least T µs within an idle period or a gap period, and may determine a channel state based on a comparison result between a result of the energy detection operation and an energy detection threshold value. T may be predefined in the technical specification. For example, T may be 9. The FBE operation scheme may be used when an environment in which other communication systems do not coexist is guaranteed (from a frequency regulation point of view). For example, in the NR or LTE communication system, the FBE operation scheme may be used in an environment where a WiFi system and WiFi devices do not coexist. In addition, a communication node (e.g., base station or terminal) may transmit a signal (e.g., downlink transmission burst, uplink transmission burst) within the COT without a channel sensing operation when a specific condition is satisfied. For example, when a gap between the signal to be transmitted by the communication node and a previous transmission is less than or equal to a reference value, the communication node may transmit the signal without a channel sensing operation. That is, the channel sensing operation may be skipped.

In exemplary embodiments, the idle period may mean a period defined by an absolute time (e.g., a period having a length of T_{z}). Alternatively, the idle period may mean a set of symbol(s). For example, the idle period may be a set of symbol(s) overlapping with the idle period defined by an absolute time. In particular, operations of the communication node (e.g., base station, terminal) related to the idle period may be based on the latter meaning.

In the FBE operation scheme, a COT may be initiated by the base station. When an LBT operation is successful in an idle period, the base station may transmit a downlink transmission burst to the terminal from a start time of the COT. In addition, the base station may transmit a downlink transmission burst at a different time within the COT. That is, the base station and the terminal may perform discontinuous downlink transmissions within one COT. The COT initiated by the base station may be shared with the terminal. In this case, the terminal may transmit uplink transmission burst(s) to the base station within the shared COT.

The base station may transmit configuration information for LBT operation to the terminal. The configuration information for LBT operation may be transmitted through higher layer signaling (e.g., RRC signaling, SIB, SIB1). The configuration information for LBT operation may include information indicating an LBT operation scheme (e.g., LBE operation scheme or FBE operation scheme) to be performed by the terminal. The terminal may receive the configuration information for LBT operation from the base station. When the FBE operation scheme is used, the configuration information for LBT operation may further include information on the FFP (e.g., periodicity or length of the FFP). In addition, the configuration information for LBT operation may include an arrangement position of each FFP, an arrangement position of a COT constituting each FFP, and/or an arrangement position of an idle period constituting each FFP in the time domain. Alternatively, the terminal may determine the position of each FFP in the time domain, the position of the COT constituting each FFP, and/or the position of the idle period constituting each FFP in the time domain according to the configuration information on LBT operation (e.g., information on the FFP) and a predefined rule.

Exemplary embodiments may be applied to both the LBE operation scheme and the FBE operation scheme. Alternatively, exemplary embodiments may be applied to any one of the LBE operation scheme and the FBE operation scheme. In exemplary embodiments, `COT or CO' may refer to `COT or CO based on an LBE operation'. In addition, in exemplary embodiments, `COT or CO' may refer to `COT or CO based on an FBE operation'.

Meanwhile, an LBT operation may be performed on a specific frequency bundle basis. The frequency bundle may be referred to as 'channel', `LBT subband', 'subband', or `resource block (RB) set'. In exemplary embodiments, an LBT subband or a subband may mean an RB set. In exemplary embodiments, a channel may mean an LBT subband, a subband, an RB set, or the like. Alternatively, a channel may correspond to an LBT subband, a subband, an RB set, or the like. The LBT operation may include the above-described CCA operation. Alternatively, the LBT operation may include `a CCA operation + a signal and/or channel transmission operation according to the CCA operation'. A bandwidth of a channel or LBT subband may vary depending on spectrum regulations, a frequency band, a communication system, an operator, and a manufacturer. For example, a bandwidth of a channel in the 5GHz band may be 20MHz. The communication node may perform sensing and data transmission in 20MHz or a frequency bundle unit corresponding to 20 MHz.

An LBT subband may be a set of consecutive RBs. The size of the LBT subband may correspond to the bandwidth of the channel (e.g., 20 MHz). The base station may configure an LBT subband to the terminal. Configuration information of the LBT subband may include information on a set of RBs constituting the LBT subband (e.g., start RB, end RB, and/or number of RBs). One carrier and/or one bandwidth part may include at least one LBT subband. When a carrier is composed of a plurality of LBT subbands, configuration information of each LBT subband may be signaled to the terminal.

When a carrier and/or bandwidth part is composed of a plurality of LBT subbands, a guard band may be inserted between adjacent LBT subbands. The guard band may be disposed within the carrier. In order to distinguish between a guard band within the carrier and a guard band outside the carrier, the guard band within the carrier may be referred to as an 'intra-carrier guard band' or `intra-cell guard band'. In exemplary embodiments, the in-carrier guard band or intra-cell guard band may be collectively referred to as a `guard band' for convenience. The guard band may be a set of consecutive RBs. The RBs constituting the guard band may be referred to as guard RBs. If the number of LBT subband(s) constituting the carrier is L, (L-1) guard bands may be disposed in the carrier. L may be a natural number. The size of a guard band may be zero.

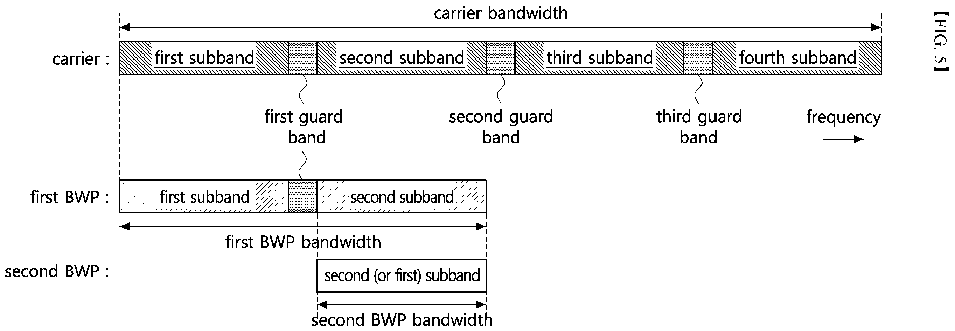

FIG. 5 is a conceptual diagram illustrating a first exemplary embodiment of a method for configuring an LBT subband and a guard band.

Referring to FIG. 5, one carrier may be composed of four LBT subbands. Three guard bands may be disposed between adjacent LBT subbands. In this case, L (i.e., the number of LBT subbands) may be 4. The LBT subband and guard band may be configured on a carrier basis. Each LBT subband and each guard band may be composed of some CRB(s) of consecutive CRBs constituting the carrier.

A base station may inform a terminal of information on a frequency range (e.g., start CRB index, end CRB index, and/or number of CRBs (or number of RBs)) of each LBT subband and/or the number of of the LBT subbands constituting the carrier through a signaling procedure (e.g., RRC signaling procedure). The base station may inform the terminal of information on a frequency range (e.g., start CRB index, end CRB index, and/or number of CRBs (or number of RBs)) of each guard band and/or the number of guard bands constituting the carrier through a signaling procedure (e.g., RRC signaling procedure). The LBT subbands and guard bands configured for the carrier may be equally applied to a bandwidth part belonging to the corresponding carrier. That is, the terminal may regard PRB(s) corresponding to CRB(s) constituting each LBT subband and each guard band in a bandwidth part as an LBT subband and a guard band for the bandwidth part. Each LBT subband may be fully included in a bandwidth part. Alternatively, each LBT subband may not be included in a bandwidth part at all. That is, each LBT subband may not be partially included in a bandwidth part. Alternatively, a bandwidth part may include a part of an LBT subband. For example, an initial downlink bandwidth part may occupy a partial frequency region of an LBT subband.

A union set of RBs constituting LBT subband(s) and guard band(s) may be the same as a set of RBs constituting the carrier (or bandwidth part). That is, each RB constituting the carrier (or bandwidth part) may belong to at least one LBT subband or guard band. Additionally or alternatively, a set of RBs constituting each LBT subband and a set of RBs constituting each guard band may be disjoint sets. That is, each RB constituting a carrier (or bandwidth part) may belong to only one LBT subband or only one guard band. In this case, the terminal may acquire a frequency range of the LBT subband(s) based on configuration information on the guard bands received from the base station. For example, a start RB of a first subband may be a start RB of the carrier, and an end RB of the first subband may be an RB before a start RB of a first guard band. For another example, a start RB of a last subband may be an RB after a last RB of a last guard band, and an end RB of the last subband may be an end RB of the carrier.

A guard band may be independently configured for each of downlink and uplink. Therefore, an LBT subband also may be independently configured for each of downlink and uplink. A frequency range of the guard band (e.g., start CRB index, end CRB index, and/or number of CRBs (or number of RBs)) may be predefined in the technical specification. When information on the frequency range of the guard band is not received from the base station, the terminal may determine frequency ranges of the LBT subband(s) and the guard band(s) based on the frequency ranges of the guard bands defined in the technical specification.

A communication node (e.g., base station, terminal) may perform an LBT operation and may occupy an LBT subband(s) in which CCA (e.g., LBT operation) is successful. That is, the communication node may initiate a COT in the LBT subband(s) in which the CCA is successful. The communication node may transmit a signal during the COT period in the occupied LBT subband(s). The base station may indicate to the terminal information on valid LBT subband(s) and/or invalid LBT subband(s). The above-described information may be transmitted to the terminal together with configuration information of the COT. Alternatively, the above-described information may be included in the configuration information of the COT, that is transmitted to the terminal. The base station may determine at least some of the LBT subband(s) occupied by the base station as valid LBT subband(s). The communication node may not transmit a signal in the guard band. Alternatively, the communication node may transmit a signal in the guard band. For example, when transmission is performed all in a guard band and two adjacent LBT subbands, transmission in the guard band may be performed at least at the same time as transmission in the two LBT subbands.

Meanwhile, an uplink data channel (e.g., PUSCH) may be scheduled by a dynamic grant or a configured grant. The dynamic grant may be DCI (or DCI format) including scheduling information, and the base station may transmit the DCI (or DCI format) to the terminal through a downlink control channel (e.g., PDCCH). The configured grant may include information for semi-static or semi-persistent configuration of scheduling, dynamic reconfiguration of scheduling, or the like, and the base station may transmit the configured grant to the terminal through higher layer signaling (e.g., RRC signaling) and/or physical layer dynamic signaling (e.g., DCI or DCI format).

By receiving a configured grant, the terminal may obtain information on a resource region(s) in which a PUSCH may be transmitted (hereinafter, referred to as `configured grant resource(s)'). The configured grant resource may be configured periodically. One or more configured grant resource(s) may be periodically repeated. When uplink traffic (e.g., uplink shared channel (UL-SCH)) is generated, the terminal may transmit a PUSCH in the configured grant resource without transmitting an additional scheduling request (SR) or receiving a dynamic grant. The PUSCH transmitted in the configured grant resource may be referred to as a 'configured grant PUSCH' .

### [Acquisition of shared COT]

When the FBE operation scheme is used, a COT initiated by a transmitting node may be shared with a receiving node. The receiving node may transmit a signal in the shared COT. That is, the receiving node may acquire the shared COT and transmit a signal in the acquired shared COT. The receiving node may acquire the shared COT when a specific condition is satisfied. For example, the receiving node may acquire the shared COT when the receiving node successfully receives or detects a signal in the COT from the transmitting node that initiated the COT. In this case, the signal transmitted for the purpose of sharing the COT may be referred to as a `COT acquisition signal' or a `shared COT acquisition signal'. When the transmitting node and the receiving node are a base station and a terminal, respectively, if the terminal successfully receives or detects a downlink signal in the COT initiated by the base station, the corresponding COT may be regarded as the shared COT, and the terminal may transmit an uplink signal in the shared COT. For example, the terminal may transmit a PUSCH in the shared COT.

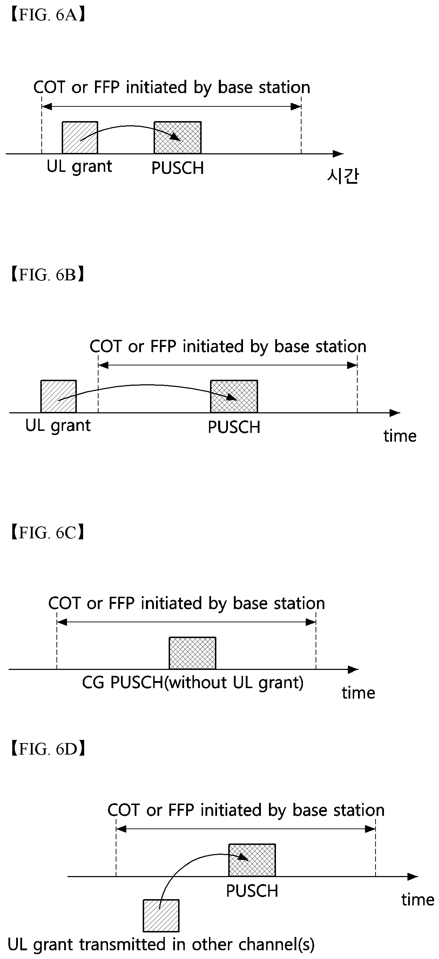

FIG. 6A is a conceptual diagram illustrating a first exemplary embodiment of a method for transmitting a PUSCH in a shared COT, FIG. 6B is a conceptual diagram illustrating a second exemplary embodiment of a method for transmitting a PUSCH in a shared COT, FIG. 6C is a conceptual diagram illustrating a third exemplary embodiment of a method for transmitting a PUSCH in a shared COT, and FIG. 6D is a conceptual diagram illustrating a fourth exemplary embodiment of a method for transmitting a PUSCH in a shared COT.

Referring to FIGS. 6A to 6D, a base station may acquire a COT by performing an LBT operation on channel(s). A terminal may attempt to share the COT initiated by the base station in the channel(s), and to transmit a PUSCH within the corresponding COT.

In the exemplary embodiment shown in FIG. 6A, the terminal may receive an uplink grant (e.g., uplink DCI, uplink DCI format, DCI format including scheduling information of a PUSCH) corresponding to the PUSCH in the COT in which the PUSCH is to be transmitted. For example, the uplink grant may be transmitted on a PDCCH. In this case, the uplink grant (or PDCCH including the uplink grant) may be regarded as a COT acquisition signal. That is, the terminal may determine that the COT initiated by the base station is shared by receiving the uplink grant, and transmit the PUSCH within the corresponding COT.

In the exemplary embodiment shown in FIG. 6B, the terminal may receive an uplink grant corresponding to a PUSCH in a region outside the COT in which the PUSCH is to be transmitted. For example, the PUSCH may be transmitted in a first COT initiated by the base station, and the uplink grant corresponding to the PUSCH may be transmitted in a second COT initiated by the base station or a COT initiated by the terminal. In this case, it may be difficult to regard the uplink grant as a COT acquisition signal for the first COT. The second COT or the COT initiated by the terminal may be located before the first COT.

In the exemplary embodiment shown in FIG. 6C, the terminal may desire to transmit a configured grant PUSCH within a COT. The configured grant PUSCH may be semi-statically scheduled, and an uplink grant corresponding to the configured grant PUSCH may not exist. That is, an uplink grant as a COT acquisition signal for the corresponding COT may not exist. In the exemplary embodiment shown in FIG. 6D, the terminal may receive an uplink grant corresponding to a PUSCH in other channel(s) (e.g., other LBT subband(s), other RB set(s), other carrier(s)) different from a COT (or, occupied channel(s)) in which the PUSCH is to be transmitted. A reception time of the uplink grant may belong to a time period of the corresponding COT. Alternatively, the reception time of the uplink grant may not belong to the time period of the corresponding COT. In this case, the uplink grant may be difficult to be regarded as a COT acquisition signal for the corresponding COT.

The exemplary embodiments shown in FIGS. 6B to 6D may be equally applied to transmission of not only a PUSCH but also other uplink transmission (e.g., PUCCH, SRS, PRACH, etc.). For example, in the exemplary embodiments shown in FIGS. 6B and 6D, the PUSCH may correspond to other uplink transmission, and the uplink grant may correspond to DCI triggering other uplink transmission. For another example, in the exemplary embodiment shown in FIG. 6C, the PUSCH may correspond to other uplink transmission (e.g., semi-statically configured PUCCH, periodic or semi-persistent SRS, PRACH, etc.). In this case, the DCI may be difficult to be regarded as a COT acquisition signal for the corresponding COT.

In the exemplary embodiments shown in FIGS. 6B to 6D, the terminal may regard the COT in which the PUSCH is to be transmitted as a shared COT, and in order to transmit the PUSCH, another downlink signal other than the uplink grant corresponding to the PUSCH may have to be transmitted within the corresponding COT. Another downlink signal may be referred to as a COT acquisition signal (or a shared COT acquisition signal). The COT acquisition signal may be transmitted earlier than the PUSCH.

Generalizing the above-described exemplary embodiments, when the COT acquisition signal is successfully received or detected within the COT, the terminal may regard the corresponding COT as a shared COT. In addition, the terminal may transmit an uplink signal in the shared COT. Within the corresponding COT, the COT acquisition signal and the uplink signal may be transmitted on the same channel(s). Within the corresponding COT, the COT acquisition signal may be transmitted earlier than the uplink signal.

The COT acquisition signal may be a common signal or a group-common signal commonly transmitted to at least one terminal. For example, a PDCCH, group-common PDCCH, and/or PDSCH may be used as the COT acquisition signal. The PDCCH may include a PDCCH transmitted through a CSS set and/or a PDCCH including common information (e.g., system information, paging message, Msg2, etc.). The group-common PDCCH may include a PDCCH including group-common information (e.g., SFI, preemption indicator, power control information, SRS request, etc.). For another example, at least some signals constituting an SS/PBCH block, a demodulation reference signal (DM-RS), a CSI-RS, a positioning reference signal (PRS), and/or a phase tracking reference signal (PT-RS) may be used as the COT acquisition signal. Information (e.g., a sequence, identifier (ID) for signal generation, cell ID, etc.) required to receive the above-described signal may be transmitted to at least one terminal, and the at least one terminal may commonly receive the above-described signal based on the information.

Alternatively, the COT acquisition signal may be a terminal-specific signal. For example, a PDCCH including terminal-specific information (e.g., PDCCH transmitted through a USS set, PDCCH including scheduling information of a data channel, DCI format 0_X (X=0, 1, 2, ...), DCI format 1_Y (Y=0, 1, 2, ...), or the like) and/or a PDSCH may be used as the COT acquisition signal. For another example, a DM-RS, CSI-RS, PRS, and/or PT-RS that may be received by a specific terminal may be used as the COT acquisition signal.

Additionally or alternatively, a downlink signal indicating uplink transmission (e.g., DCI, DCI format, PDCCH, dynamic grant, uplink grant, CSI request, SRS request, etc.) may be used as the COT acquisition signal. For example, a downlink grant (e.g., DCI format 1_Y (Y=0, 1, 2, ...)), an uplink grant (e.g., DCI format 0_X (X=0, 1, 2, ...)), and/or an SRS transmission indicator (e.g., DCI format 2_3) may be used as the COT acquisition signal.

A plurality of signals may be used as the COT acquisition signal. For example, at least one of the above-described signals may be used as the COT acquisition signal.

When a PDCCH and/or PDSCH are used as the COT acquisition signal, the terminal may determine whether or not the COT acquisition signal is successfully received through a cyclic redundancy check (CRC). Accordingly, reliability of the terminal's determination may increase. When a synchronization signal and/or a reference signal is used as the COT acquisition signal, the terminal may determine whether the signal is successfully detected using an energy detection reference value. In this case, a time for receiving or detecting the COT acquisition signal may be shortened.

The COT acquisition signal may be transmitted at an arbitrary time (e.g., arbitrary symbol(s)) within the COT. Alternatively, the COT acquisition signal may be transmitted in a partial time period (hereinafter referred to as a `first period') of the COT. That is, the receiving node (e.g., terminal) may receive or monitor the COT acquisition signal within the first period, and may expect not to receive the COT acquisition signal in the remaining time period excluding the first period. The first period may be composed of some symbol(s) within the COT. The symbol(s) constituting the first period may be consecutive in the time domain. The first period may be predefined in the technical specification. Alternatively, the terminal may receive configuration information of the first period (e.g., a set of symbols constituting the first period, a start time of the first period, and/or the length of the first period) from the base station.

The transmitting node (e.g., base station) may transmit a signal after a channel sensing operation is successful in an idle period. Accordingly, the COT acquisition signal may be transmitted at a start part of the COT. For example, the COT acquisition signal may be transmitted in symbol(s) including the first symbol of the COT (e.g., the first symbol of the FFP). That is, the first period may include at least the first symbol of the COT (e.g., the first symbol of the FFP). The terminal may receive or monitor the COT acquisition signal in the symbol(s) including the first symbol of the COT. The terminal may receive appropriate configuration information from the base station so as to receive the COT acquisition signal in the symbol(s) including the first symbol of the COT. For example, when a DCI format 2_0 is used as the COT acquisition signal, the terminal may expect to receive configuration information of a search space set (e.g., type 3 CSS set) for monitoring the DCI format 2_0 in the symbol(s) including the first symbol of COT. For another example, when a reference signal (e.g., periodic reference signal, semi-persistent reference signal) is used as the COT acquisition signal, the terminal may expect that a transmission resource of the reference signal includes the first symbol of the COT.

When the COT acquisition signal is not received in the first period, the terminal may regard that the corresponding COT (e.g., the COT initiated by the base station) is not occupied by the base station. For example, when the COT acquisition signal is not received in the resources (e.g., CSI-RS resource, SS/PBCH block resource, CORESET, search space set, and/or PDCCH monitoring occasion) including the first symbol of the COT initiated by the base station, the terminal may regard that the corresponding COT is not occupied by the base station. In this case, the terminal may not perform a reception operation or a monitoring operation of the COT acquisition signal within the corresponding COT. The terminal may not perform downlink reception and/or measurement operations within the corresponding COT. If the terminal receives a downlink transmission burst, but the received downlink transmission burst does not belong to the first period of the COT (e.g., when a resource in which the downlink transmission burst is received does not include the first symbol of the COT initiated by the base station), the terminal may regard that the received downlink transmission burst is transmitted through a COT (e.g., COT initiated by the terminal or another terminal) other than the COT initiated by the base station. The terminal may not perform an uplink transmission operation using the corresponding COT (e.g., COT initiated by the base station). According to the above-described method, power consumption of the terminal may be reduced.

Meanwhile, after successfully receiving the COT acquisition signal, the terminal may transmit an uplink signal within the corresponding COT. A time required to determine whether the COT acquisition signal is successfully received may vary for each terminal. In addition, when a plurality of COT acquisition signals are used, the time required to determine whether the COT acquisition signal is successfully received may be different for each type of COT acquisition signal. In this case, since the base station does not accurately identify the time for the terminal to process (e.g., receive and/or detect) the received COT acquisition signal, the time for the terminal to determine whether the COT is acquired, and/or the time for the terminal to prepare for transmission of an uplink signal, it may be difficult for the base station to determine from what time point the terminal can perform uplink transmission. That is, uncertainty may occur in uplink transmission.

As a method for solving the above-described problem, a processing time (or reference value) required for the terminal to acquire a shared COT may be predefined (e.g., in the technical specification). The processing time (or reference value) may be referred to as a `COT acquisition processing time', 'shared COT acquisition processing time', `processing time for validation of COT sharing', `processing time for validation of uplink transmission', or the like. The processing time (or reference value) may be represented as T_{proc,cot}.

Specifically, T_{proc,cot} may include a time required for the terminal to process (e.g., receive and/or detect) the received COT acquisition signal, a time for the terminal to determine whether the COT is acquired, and/or a time for the terminal to prepare for transmission of an uplink signal. When the COT acquisition signal is received within the COT, the terminal may determine validity of uplink transmission within the corresponding COT based on a relationship among the reception time of the COT acquisition signal (e.g., symbol(s) to which the COT acquisition signal is mapped), a transmission time of the uplink signal (e.g., symbol(s) to which the uplink signal that the terminal is to transmit is mapped), and T_{proc,cot}.

For example, when the COT acquisition signal is received within the COT, if the first symbol of the uplink transmission does not precede the earliest symbol after the time T_{proc, cot} from the end time of the last symbol in which the COT acquisition signal is received, the terminal may regard that uplink transmission is valid, and may transmit the corresponding uplink signal. On the other hand, when the uplink transmission does not satisfy the above-described condition, the terminal may regard that the uplink transmission is not valid, and may not transmit the corresponding uplink signal. Here, a duration of a symbol may be a period including a CP period. That is, a start time of a symbol may mean a start time of a CP period. The base station may configure (or indicate) the uplink transmission or may transmit the COT acquisition signal in consideration of the above-described operation of the terminal. The above-described method may be referred to as (Method 100). (Method 100) nay be applied to the FBE or FBE operation scheme. In addition, (Method 100) may be applied to the LBE or LBE operation scheme.

T_{proc,cot} may be determined according to a subcarrier spacing of the COT acquisition signal, a subcarrier spacing of the uplink signal, and/or a processing capability of the terminal. A plurality of T_{proc,cot}(s) may be defined, and each of the plurality of T_{proc,cot}(s) may be defined as a processing capability of the terminal. For example, T_{proc,cot1} and T_{proc,cot2} may be defined. Alternatively, a parameter (e.g., delay time in units of a symbol) indicating a capability related to a terminal processing time may be defined, and T_{proc,cot} may be defined as a function of the above-described parameter. The terminal may support at least one capability among a plurality of capabilities related to T_{proc,cot}. The terminal may transmit its own capability(ies) for T_{proc,cot} to the base station. The base station may perform uplink transmission and/or COT acquisition signal transmission in consideration of (Method 100) based on the capability information received from the terminal.

For example, it may be defined as '*T_{proc,cot}* = *A* × (2048 + 144) × *κ* × 2^{-*µ*} × *T_{c}'.* Here, *A* may be a delay time in units of a symbol (e.g., the number of symbols). *κ* may be 64. *T_{c}* may be 1/(480×103×4096). µ may be a subcarrier spacing that provides a larger T_{proc,cot} among the subcarrier spacing of the COT acquisition signal and the subcarrier spacing of the uplink signal. A plurality of candidate values for A may be defined. Whether the terminal supports specific candidate value(s) of A may be defined as the capability of the terminal. For another example, it may be defined as '*T_{proc,cot}* = max(A × (2048 + 144) × *κ* × 2^{-*µ*} × *T_{c},* C)'. Here, C may mean a switching time of the bandwidth part. For another example, it may be defined as '*T_{proc,cot}* = max((*A* + *B*) × (2048 + 144) × *κ* × 2^{-*µ*} × *T_{c},* C)'. Here, *B* may mean an additional delay time in units of a symbol (e.g., the number of additional symbols). For example, when the first symbol of the uplink signal (e.g., PUSCH) includes only a DM-RS, *B* may be 0. When the first symbol of the uplink signal (e.g., PUSCH) includes not only a DM-RS, *B* may be 1.

(Method 100) may be applied to each uplink transmission. That is, the terminal may determine validity of each uplink transmission (e.g., determine whether to perform each uplink transmission) based on (Method 100). The uplink transmission may include transmission of a PUSCH, PUCCH, DM-RS, SRS, and/or PRACH. A unit of uplink transmission to which (Method 100) is applied may be a 'resource'. For example, the terminal may determine the validity in units of time resources (e.g., duration, symbol(s)) to which each PUSCH, PUCCH, DM-RS, SRS, and/or PRACH is mapped. When repetitive transmission is applied to the uplink transmission, the unit of uplink transmission to which (Method 100) is applied may be `each transmission instance' repeatedly transmitted. For example, when the terminal is scheduled to repeatedly transmit a PUSCH for the same transport block(s) (i.e., TB(s)), the terminal may determine validity for each PUSCH instance, and transmit only valid PUSCH instance(s). Alternatively, the unit of uplink transmission to which (Method 100) is applied may be a 'symbol'. For example, when the terminal intends to transmit an SRS, the terminal may determine validity of the SRS transmission in units of symbols, and may transmit the SRS in the valid symbol(s). That is, when one SRS resource is configured with a plurality of symbols, according to (Method 100), the SRS may be transmitted only in some symbol(s).

When a downlink signal (e.g., DCI, DCI format, PDCCH, dynamic grant, uplink grant, CSI request, SRS request, etc.) indicating uplink transmission is transmitted within the same COT as the uplink transmission, the downlink signal may be used as a COT acquisition signal. In this case, the terminal may determine the validity of uplink transmission based on the downlink signal and a processing time (or, reference value) defined separately from T_{proc,cot}. For example, when an uplink grant indicating transmission of a PUSCH is received within the same COT as the corresponding PUSCH, the terminal may determine whether to transmit the PUSCH based on the uplink grant and a separately defined processing time (or reference value). In this case, the above-described method may take precedence over (Method 100). Alternatively, when the downlink signal indicating the uplink transmission is used as the COT acquisition signal, the terminal may determine whether to transmit the corresponding uplink signal based on (Method 100).

According to (Method 100), the terminal may determine whether each PUSCH is valid based on the position of the time resource of each PUSCH allocated within the COT initiated by the base station. The terminal may perform an operation of transmitting a PUSCH determined to be valid, and may expect to receive a retransmission indication for the corresponding PUSCH (or TB and/or HARQ process corresponding to the PUSCH) from the base station. The retransmission indication may be performed through an uplink grant or configured grant-downlink feedback information (CG-DFI), and may be transmitted to the terminal through DCI. In addition, the terminal may not perform an operation of transmitting a PUSCH determined to be invalid, and may not expect to receive a retransmission indication for the corresponding PUSCH (or, TB and/or HARQ process corresponding to the PUSCH). For example, when the PUSCH is initial transmission, the terminal may not expect to receive a retransmission indication for the corresponding PUSCH from the base station. The PUSCH may be a configured grant PUSCH.

When a plurality of downlink signals are used as the COT acquisition signal, T_{proc,cot} may be commonly applied to a set of COT acquisition signal(s). The set of COT acquisition signal(s) to which the same T_{proc,cot} is applied may include at least one COT acquisition signal(s). For example, the set of COT acquisition signal(s) to which the same T_{proc,cot} is applied may include at least one physical channel. That is, the set of COT acquisition signal(s) to which the same T_{proc,cot} is applied may include a group-common PDCCH (e.g., DCI format transmitted to a group of terminals), a PDCCH, and/or a PDSCH. For another example, the set of COT acquisition signal(s) to which the same T_{proc,cot} is applied may include at least one physical signal. That is, the set of COT acquisition signal(s) to which the same T_{proc,cot} is applied may include at least some signals constituting an SS/PBCH block, a DM-RS, a CSI-RS, a PRS, and/or a PT-RS. In addition, when a plurality of T_{proc,cot}(s) are defined, each of the plurality of T_{proc,cot}(s) may be applied to a different set of COT acquisition signal(s).

As described above, the transmitting node may perform an LBT operation on a plurality of channels (e.g., a plurality of LBT subbands, a plurality of RB sets), and initiate a common COT for channel(s) in which the transmitting node succeeded in CCA. Alternatively, the transmitting node may independently initiate a COT for each of the channel(s) that succeeded in CCA. For the plurality of channels, the common COT or respective COTs may be shared with the receiving node, and the receiving node may perform transmission in the shared COT. In this case, when a COT acquisition signal is successfully received or detected, the terminal (e.g., receiving node) may acquire a shared COT in a channel(s) different from a channel(s) in which the COT acquisition signal is received, and may transmit an uplink signal in the shared COT. In addition, when a COT acquisition signal is successfully received or detected, the terminal may acquire a shared COT in the plurality of channels, and transmit an uplink signal in the shared COT. The plurality of channels may include channel(s) through which the terminal receives the COT acquisition signal. In addition, the plurality of channels may include channel(s) different from the channel(s) in which the terminal receives the COT acquisition signal. The above-described method may be referred to as (Method 110).

The above-described method may be applied equally to (Method 100). That is, (Method 100) may be applied even when the channel(s) in which the terminal receives the COT acquisition signal and the channel(s) to perform uplink transmission are different from each other. In addition, the terminal may check the validity of uplink transmission for the plurality of channels based on (Method 100), and may determine whether to perform uplink transmission. The validity check of uplink transmission may be performed independently for each of the plurality of channels. The plurality of channels may include channel(s) through which the terminal receives the COT acquisition signal. In addition, the plurality of channels may include channel(s) different from the channel(s) in which the terminal receives the COT acquisition signal. The above-described method may be referred to as (Method 120).

The channel(s) (e.g., LBT subband(s), RB set(s)) in which the COT acquisition signal is received and the channel(s) (e.g., LBT subband(s), RB set(s)) to perform uplink transmission may belong to the same carrier and/or the same bandwidth part. Alternatively, the channel(s) (e.g., LBT subband(s), RB set(s)) in which the COT acquisition signal is received and the channel(s) (e.g., LBT subband(s), RB set(s)) to perform uplink transmission may belong to different carriers and/or different bandwidth parts. In this case, the above-described methods (e.g., (Method 110), (Method 120)) may be applied between different carriers and/or different bandwidth parts. For example, the terminal may receive a COT acquisition signal in a first carrier (or, first bandwidth part), and determine an uplink transmission operation in a second carrier (or, second bandwidth part) based on the COT acquisition signal.

In the case of the FBE operation scheme, boundaries of FFPs for a plurality of channels may be aligned with each other. Alternatively, the boundaries of FFPs for a plurality of channels may not be aligned with each other. The above-described methods (e.g., (Method 110), (Method 120)) may be used when the FFPs of the channel(s) in which the terminal receives the COT acquisition signal and the FFPs of the channel(s) to perform uplink transmission are temporally aligned with each other. Alternatively, the above-described methods (e.g., (Method 110), (Method 120)) may be used when the FFPs of the channel(s) in which the terminal receives the COT acquisition signal and the FFPs of the channel(s) to perform uplink transmission are not generally aligned with each other. In this case, a time period in which the channel(s) in which uplink transmission is performed according to the reception of the COT acquisition signal are shared with the terminal may be identical to a time period of the COT of the channel(s) in which the terminal receives the COT acquisition signal (e.g., the COT in which the COT acquisition signal is received). Alternatively, the time period in which the channel(s) in which uplink transmission is performed according to the reception of the COT acquisition signal are shared with the terminal may be determined based on the time period of the COT of the channel(s) in which the terminal receives the COT acquisition signal (e.g., the COT in which the COT acquisition signal is received).

For another example, the time period in which the channel(s) in which uplink transmission is performed according to the reception of the COT acquisition signal are shared with the terminal may be the COT of the channel(s) in which the uplink transmission is performed. Alternatively, the time period in which the channel(s) in which uplink transmission is performed according to the reception of the COT acquisition signal are shared with the terminal may be determined based on the COT of the channel(s) in which the uplink transmission is performed. The COT shared with the terminal may be determined based on the reception time of the COT acquisition signal. For example, the COT shared with the terminal may be a COT including the reception time (or reception period) of the COT acquisition signal. Alternatively, the COT shared with the terminal may be a first COT after the reception time (or reception period) of the COT acquisition signal. Meanwhile, the terminal may receive the COT acquisition signal at a plurality of time points (e.g., a plurality of time points in the same or different channel(s)). In this case, a sum of the time periods shared with the terminal through the receptions of the respective COT acquisition signals may be shared with the terminal, and the terminal may transmit an uplink signal in the sum of the time periods of the relevant channel(s).

As described above, the DCI format 2_0 may be used as the COT acquisition signal. The DCI format 2_0 may include a COT duration indicator. The terminal may obtain the COT duration indicator from the DCI format 2_0, and may identify the length of the entire period of the COT or the length of the remaining period of the COT based on the COT duration indicator. For example, the COT duration indicator may include information on a time (e.g., the number of symbols) from a reference time (e.g., reference symbol) to an end time of the COT (e.g., the last symbol of the COT). For example, the reference time may be a start time of the COT (e.g., the first symbol constituting the COT). For another example, the reference time may be a symbol (e.g., the first symbol) of a slot in which the DCI format 2_0 including the COT duration indicator is transmitted.

The terminal may identify the position of the end time of the COT (e.g., the last symbol of the COT) based on the above-described information. Alternatively, the terminal may directly receive information on the end time of the COT (e.g., the last symbol of the COT) from the base station. For example, information on the end time of the COT may be included in the DCI format 2_0 transmitted to the terminal. In addition, the terminal may determine which symbol(s) belong to the COT based on the above-described information. When a symbol in which a CSI-RS (e.g., periodic CSI-RS, semi-persistent CSI-RS) is configured belongs to a COT, the terminal may receive the CSI-RS in the corresponding symbol, and perform operations related to the received CSI-RS (e.g., CSI measurement and/or calculation).

On the other hand, when the symbol in which the CSI-RS (e.g., periodic CSI-RS, semi-persistent CSI-RS) is configured does not belong to the COT, the terminal may not perform the CSI-RS reception operation in the corresponding symbol. In addition, when a symbol(s) in which uplink transmission is configured belong to the COT, the terminal may change an LBT type for the uplink transmission. For example, the LBT type for the uplink transmission may be changed from a fourth category LBT (or, type 1 channel access procedure) to a second category LBT (or, type 2 or 2A channel access procedure). Each of the CSI-RS reception operation and the uplink LBT operation may be determined by whether the COT duration indicator is received and/or the COT duration information indicated by the COT duration indicator. When the COT duration indicator and/or the information on the end time of the COT is not included in the DCI format 2_0, the information on the COT duration and/or the information on the end time of the COT may be obtained from an SFI of the DCI format 2_0.

On the other hand, in the case of the FBE operation scheme, the start time and/or the end time of the COT may be determined in advance by the above-described FFP structure. That is, the start time of the COT may be the first symbol in the FFP, and the end time of the COT may be the last symbol that does not overlap with the idle period among the symbols in the FFP. The start time and/or end time of the COT may be regarded as the same by the transmitting node (e.g., base station) and the receiving node (e.g., terminal). The terminal may ignore information on the duration of the COT and/or the end time of the COT indicated from the COT duration indicator included in the DCI format 2_0.

Alternatively, the terminal may expect that the COT duration indicator included in the DCI format 2_0 indicates the number of symbols from the reference time (e.g., the first symbol of the slot in which the DCI format 2_0 is transmitted) to the predetermined end time of the COT (e.g., the last symbol not overlapping with the idle period among the symbols within the FFP). That is, the terminal may expect that the last symbol of the COT acquired from the COT duration indicator coincides with the predetermined end time of the COT (e.g., the last symbol not overlapping with the idle period among the symbols within the FFP). Alternatively, in the case of the FBE operation scheme, the DCI format 2_0 may not include the COT duration indicator.

The terminal may consider that the COT is acquired by receiving the DCI format 2_0. Meanwhile, information indicated by fields of the DCI format 2_0 may be unnecessary to the terminal. In this case, at least part of a payload of the DCI format 2_0 may have a predefined size and value (i.e., dummy value). For example, at least part of the payload of the DCI format 2_0 may include a bit string having a predefined length and value. For example, the bit string may be a bit string in which values of all bits are '0' or a bit string in which values of all bits are '1'. The dummy value or bit string may be defined as a specific field (e.g., COT duration indicator, SFI, valid RB set indicator, search space set switching indicator, etc.). For example, the DCI format 2_0 may include only the COT duration indicator field, and the COT duration indicator field may have a predefined bit string. Alternatively, the DCI format 2_0 may further include other fields in addition to the COT duration indicator field. The encoding and decoding of the DCI format 2_0 having the dummy value or bit string may be performed by a polar code. The length of the bit string may be at least 12.

### [PUSCH transmission]

The PUSCH may be repeatedly transmitted. That is, the PUSCH may be repeatedly transmitted multiple times for the same TB(s).

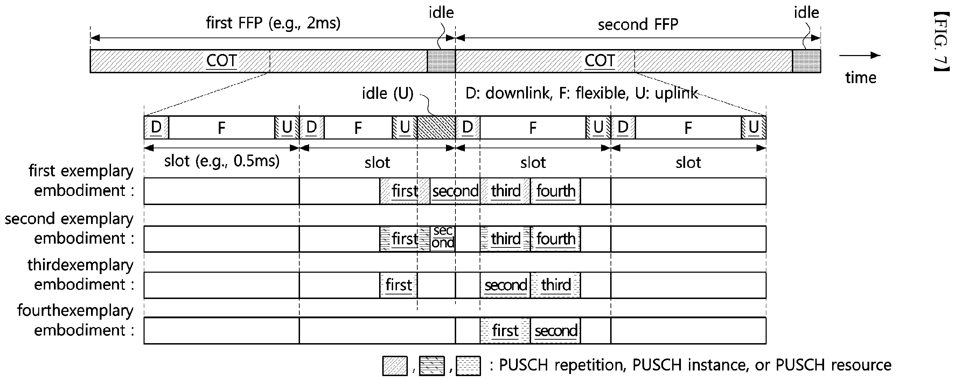

FIG. 7 is a conceptual diagram illustrating exemplary embodiments of a method for repeatedly transmitting a PUSCH in a shared COT.

Referring to the first to fourth exemplary embodiments shown in FIG. 7, consecutive FFPs may exist repeatedly, and an idle period may be disposed in an end part of each FFP. In addition, a slot format of each slot may include a downlink (D) period, a flexible (F) period, and/or an uplink (U) period. The period or symbol(s) marked as 'idle' in the slot format may include symbol(s) overlapping with the idle period. The period or symbol(s) marked as 'idle' may be configured as downlink symbol(s), flexible symbol(s), and/or uplink symbol(s). The period or symbol(s) marked as 'idle' may be configured in a separate format (e.g., `idle period' or `idle symbol(s)') distinguished from downlink, flexible, and uplink. The period or symbol(s) marked as 'idle' may be configured to the terminal through a separate signaling different from the slot format configuration signaling. In the period or symbol(s) marked as 'idle', the communication node (e.g., base station, terminal) may not transmit a signal. The symbol marked as 'idle' may be referred to as an idle symbol. In the exemplary embodiments, the PUSCH may be repeatedly transmitted for the same TB(s).

In the first exemplary embodiment shown in FIG. 7, the terminal may receive scheduling information for four times-repeated transmission of a PUSCH. Four PUSCH instances (e.g., first to fourth PUSCH instances) or four PUSCH resources (i.e., first to fourth PUSCH resources) may be consecutive in time. A PUSCH instance (e.g., second PUSCH instance) may be allocated across two slots. For example, the second PUSCH instance may include a slot boundary. The PUSCH instance (e.g., second PUSCH instance) may include downlink symbol(s) (e.g., downlink symbol(s) configured semi-statically). The PUSCH instances (e.g., first and second PUSCH instances) may include idle symbol(s). The PUSCH instances may be nominal PUSCH instances scheduled to the terminal, and PUSCH resources may be nominal PUSCH resources scheduled to the terminal. The terminal may transmit the PUSCH instances in the nominal resources scheduled by the base station.

In the second to fourth exemplary embodiments shown in FIG. 7, resource(s) in which the PUSCH instance(s) are actually transmitted may be different from the nominal resource(s). The terminal may not use the nominal PUSCH resource(s) scheduled by the base station as they are. That is, the terminal may configure new resource(s) by changing the nominal PUSCH resource(s) according to a predetermined rule, and transmit the PUSCH instance(s) in the new resource(s). In the second exemplary embodiment shown in FIG. 7, some PUSCH instances (e.g., second PUSCH instance) may be segmented based on a slot boundary and/or a downlink period (e.g., downlink symbol(s) configured semi-statically), and may be transmitted in symbol(s) excluding the downlink period (e.g., downlink symbol(s) configured semi-statically). The terminal may transmit PUSCH instance(s) corresponding to the some PUSCH instances (e.g., second PUSCH instance) in the changed resource(s). The terminal may transmit the remaining PUSCH instances (e.g., first, third, and fourth PUSCH instances) in the nominal resource(s).

In the third exemplary embodiment shown in FIG. 7, resources of some PUSCH instances (e.g., first and second nominal PUSCH instances) may include at least one idle symbol. Some PUSCH instances (e.g., first and second nominal PUSCH instances) may be segmented based on the idle period or the idle symbol(s), and may be transmitted in symbol(s) excluding the idle period or the idle symbol(s). For example, the terminal may transmit the first nominal PUSCH instance in the symbol(s) excluding the idle symbol(s). For another example, the terminal may transmit the second nominal PUSCH instance in the symbol(s) excluding the idle symbol(s). In addition, the second nominal PUSCH instance may be transmitted in the symbol(s) excluding the downlink symbol(s) according to the second exemplary embodiment shown in FIG. 7. Under the above two conditions, the terminal may not transmit the second nominal PUSCH instance. The terminal may transmit the third and fourth nominal PUSCH instances in the nominal resource(s). The first, third, and fourth nominal PUSCH instances may correspond to the first, second, and third actual PUSCH instances, respectively.

In the fourth exemplary embodiment shown in FIG. 7, resources of some PUSCH instances (e.g., first and second nominal PUSCH instances) may include at least one idle symbol. When the nominal PUSCH instance includes an idle symbol, the terminal may not transmit the corresponding nominal PUSCH instance. For example, the terminal may not transmit the first and second nominal PUSCH instances. The terminal may transmit the remaining nominal PUSCH instances (e.g., third and fourth PUSCH instances) in the nominal resource(s). The third and fourth nominal PUSCH instances may correspond to the first and second actual PUSCH instances, respectively.

In the exemplary embodiments, the terminal may receive information on a start symbol of the first PUSCH instance, information on a duration (e.g., number of symbols) of the first PUSCH instance, and/or information on the number of repeated transmissions of the PUSCH (i.e., the number of PUSCH instances) from the base station through a dynamic grant or a configured grant. The temporal position(s) of the PUSCH instance(s) other than the first PUSCH instance may be determined from the temporal position of the first PUSCH instance. For example, all PUSCH instances repeatedly transmitted may be temporally consecutive, and may have the same duration. The mapping types (e.g., type A or type B) of the PUSCH instances may be predetermined or may be configured to the terminal. Here, the PUSCH instance(s) may be nominal PUSCH instance(s).

In the case of repetitive PUSCH transmissions, a pattern of redundancy version (RV) values may be applied to actual PUSCH instance(s). For example, the RV pattern applied to the PUSCH instance(s) may be a pattern in which (0, 2, 3, 1) is repeated (e.g., 0, 2, 3, 1, 0, 2, 3, 1, ... ). In the third exemplary embodiment shown in FIG. 7, the RV values of (0, 2, 3) may be applied to the first, second, and third actual PUSCH instances (e.g., first, third, and fourth nominal PUSCH instances), respectively. In the fourth exemplary embodiment shown in FIG. 7, the RV values of (0, 2) may be applied to the first and second actual PUSCH instances (e.g., third and fourth nominal PUSCH instances), respectively.

The above-described method may be used for unlicensed band communication. The above-described method may be applied to the FBE or FBE operation scheme. The above-described method may be applied to the LBE or LBE operation scheme. In addition, the above-described method may be applied to a PUSCH scheduled by a dynamic grant (e.g., uplink grant, DCI, DCI format, etc.). Alternatively, the above-described method may be applied to a PUSCH scheduled by a configured grant (e.g., configured grant resource configuration, RRC signaling, and/or DCI signaling). The above-described method may be applied to uplink transmissions other than PUSCH. For example, the above-described method may be used for repetitive PUCCH transmissions. When a PUCCH is repeatedly transmitted for the same control information (e.g., UCI), the above-described method may be applied to PUCCH instance(s) or PUCCH resource(s). The above-described method may be applied to a PUCCH transmission scheduled (or triggered to be transmitted) by a dynamic grant (e.g., uplink grant, downlink grant, DCI, DCI format, etc.). Alternatively, the above-described method may be applied to a PUCCH transmission that is semi-statically configured. The PUCCH may include a scheduling request (SR), HARQ-ACK, CSI (e.g., CSI part 1, CSI part 2), and/or reference signal received power (RSRP) measurement information.

Meanwhile, as described above, the terminal may determine some symbol(s) as invalid symbols that cannot be used for PUSCH transmission. For example, a symbol configured as a downlink symbol according to a semi-static slot format configuration, and/or a symbol in which an SS/PBCH block is transmitted may be regarded as an invalid symbol. For another example, when the FBE operation scheme is used, the idle symbol may be regarded as an invalid symbol. In addition, a set of invalid symbols may be explicitly configured by the base station to the terminal. The terminal may consider symbols that are not regarded as invalid symbols as valid symbols that can be used for PUSCH transmission.

When a nominal PUSCH instance allocated to the terminal includes invalid symbol(s), the nominal PUSCH instance may be converted into one or more actual PUSCH(s). Each actual PUSCH instance may be composed of different consecutive valid symbol(s) within a period of the nominal PUSCH instance. For example, a nominal PUSCH instance may be allocated to 4 consecutive symbols having indices 0 to 3. When a symbol having an index 1 among the four consecutive symbols is determined as an invalid symbol, the nominal PUSCH instance may be converted into two actual PUSCH instances. The first actual PUSCH instance may be allocated to a symbol having index 0, and the second actual PUSCH instance may be allocated to two consecutive symbols having indices 2 and 3. When the nominal PUSCH instance is segmented to actual PUSCH instance(s), the terminal may transmit the actual PUSCH instance(s) instead of the nominal PUSCH instance. Also, an actual PUSCH instance whose duration is less than or equal to a reference value may be dropped. For example, the reference value may be one symbol. In this case, in the above-described exemplary embodiment, the first actual PUSCH instance may be dropped, and only the second actual PUSCH instance may be transmitted. The above-described method may be applied when the PUSCH is repetitively transmitted (e.g., when a plurality of PUSCH instances are allocated for the same TB).

### [Uplink transmission at an FFP boundary]

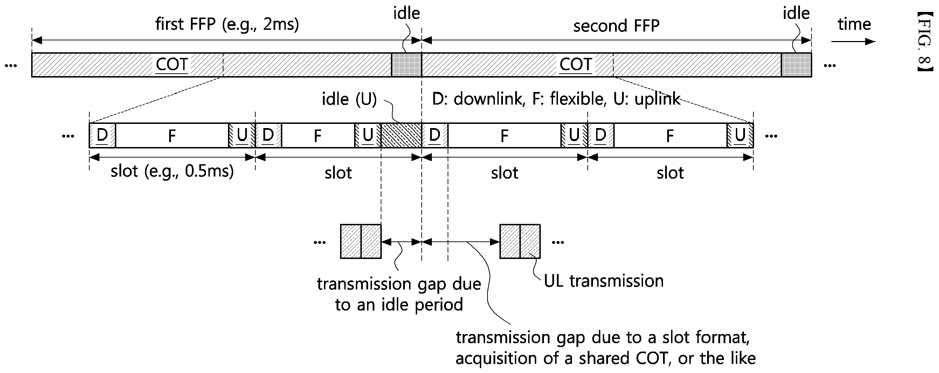

FIG. 8 is a conceptual diagram illustrating a first exemplary embodiment of a method for uplink transmission near an FFP boundary.

Referring to FIG. 8, the terminal may transmit an uplink signal in an uplink symbol and/or a flexible symbol of a slot. Meanwhile, an idle period may be disposed at an end part of each FFP (e.g., before a boundary of the FFP). In this case, a time delay of the uplink transmission may increase near the FFP boundary. The terminal cannot perform uplink transmission in the idle period (e.g., idle symbol(s)). Accordingly, the uplink transmission of the terminal may be delayed by the length of the idle period or a time corresponding to the idle period. In addition, in order to acquire a shared COT at a start part of the COT (or FFP) initiated by the base station, the terminal may perform an operation of receiving a COT acquisition signal. The terminal may not be able to perform uplink transmission within the corresponding COT until the terminal receives and detects the COT acquisition signal (e.g., until the time determined by (Method 100)). In addition, the terminal may not be able to perform uplink transmission until an uplink symbol and/or a flexible symbol. Therefore, the uplink transmission may be delayed.

As a method for solving the above-described problem, in the FBE operation scheme, the terminal may perform an operation of a transmitting node (e.g., communication node initiating the COT). The terminal (e.g., FBE, the terminal performing the FBE operation scheme) may initiate a COT when an LBT operation is successful for channel(s) in an idle period (e.g., sensing period, sensing slot, a previous period of the COT), and may transmit an uplink transmission burst to the base station from a start time of the COT. The temporal position of the idle period or a period in which the terminal performs the sensing operation within the idle period may be determined by information on a transmission timing of the terminal (e.g., timing advance (TA)). The COT initiated by the terminal may be shared with the base station. In this case, the base station may transmit a downlink transmission burst to the terminal within the shared COT. The above-described method may be referred to as (Method 200).

An FFP (hereinafter, referred to as `uplink FFP') for the case where the transmitting node is a terminal may be distinguished from an FFP (hereinafter referred to as `downlink FFP') for the case where the transmitting node is a base station. The terminal may receive information on a downlink FFP from the base station. The terminal may receive information on an uplink FFP (e.g., an FFP for the case where the transmitting node is the terminal) from the base station. The information on the uplink FFP may include at least information (e.g., a periodicity of the uplink FFP or a length of the uplink FFP) corresponding to the above-described information on the downlink FFP. In addition, the information on the uplink FFP may include information on a time offset of the FFP. The time offset may be commonly applied to all FFPs. In addition, the time offset may be an offset between a start time of the FFP (e.g., a first FFP after a reference time) and the reference time (e.g., a start time of every second radio frame).

A configuration unit (e.g., granularity) of the time offset may be Ns slot(s) or Nb symbol(s). Each of Ns and Nb may be a natural number. For example, Ns may be 1, and Nb may be 1. When a plurality of subcarrier spacings are configured (e.g., used) in a carrier (or bandwidth part) in which the uplink FFP is configured, the time offset may refer to slot(s) or symbol(s) for a specific subcarrier spacing. For example, the specific subcarrier spacing may be configured from the base station to the terminal. Alternatively, the specific subcarrier spacing may be the smallest (or largest) subcarrier spacing among the subcarrier spacing(s) configured in the carrier (or bandwidth part). Alternatively, the specific subcarrier spacing may be a subcarrier spacing configured in an active bandwidth part (e.g., active downlink bandwidth part or active uplink bandwidth part). The above-described method of applying the time offset of the FFP may be applied equally to the downlink FFP. In addition, information on a time offset of the downlink FFP may be included in the information on the downlink FFP, and may be signaled to the terminal.

The time offset for the uplink FFP may be a value including a TA of the terminal. Alternatively, the time offset for the uplink FFP may be a value that does not include the TA of the terminal. In this case, an actual period during which the terminal performs a sensing operation in an idle period of the uplink FFP and an actual time at which the terminal transmits a signal in a COT of the uplink FFP may be a time that is advanced by the TA of the terminal. Alternatively, the information on the uplink FFP may additionally include the TA of the terminal or a time offset corresponding to the TA of the terminal, and the terminal may determine a temporal position of the uplink FFP based on the information on the uplink FFP.

The information on the uplink FFP may be included in system information (e.g., SIB1) transmitted to the terminal. In addition, the information on the uplink FFP may be transmitted to the terminal through RRC signaling (e.g., terminal-specific RRC signaling, cell-specific RRC signaling). The terminal may receive a plurality of configuration information on the uplink FFP through a plurality of signaling schemes (e.g., SIB1 and terminal-specific RRC signaling). In this case, the terminal may select one configuration information (e.g., configuration information received by terminal-specific RRC signaling) from among the plurality of configuration information based on a predetermined priority, and may configure the uplink FFP based on the selected configuration information.

In exemplary embodiments, a COT and an idle period constituting the downlink FFP may be referred to as `downlink COT' and 'downlink idle period', respectively. A COT and an idle period constituting the uplink FFP may be referred to as `uplink COT' and `uplink idle period', respectively.

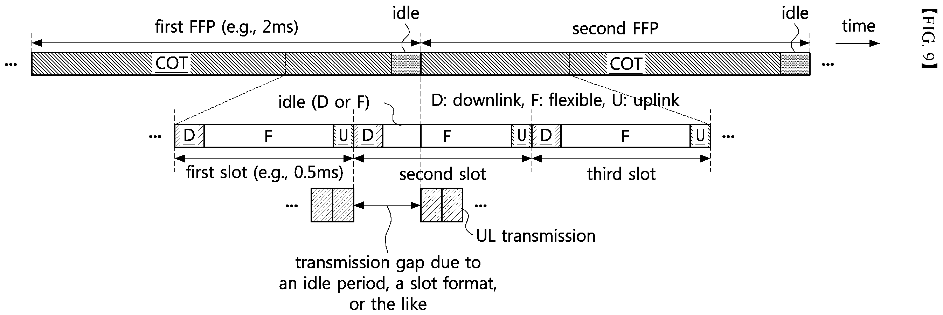

FIG. 9 is a conceptual diagram illustrating a second exemplary embodiment of a method for uplink transmission near an FFP boundary.

Referring to FIG. 9, a terminal may transmit an uplink signal in an uplink symbol and/or a flexible symbol of a slot. The terminal may receive configuration information of a slot format and configuration information of an uplink FFP (i.e., UL FFP) from a base station. That is, the slot format and the uplink FFP may be configured to the terminal. For example, uplink FFPs may be shifted by a time offset configured by the base station, and an uplink FFP boundary (e.g., a boundary of first and second uplink FFPs) may be located in a middle of a slot (e.g., the second slot). The terminal may not perform uplink transmission in an idle period (e.g., idle symbol(s)) and/or downlink symbol(s) (e.g., downlink symbol(s) configured semi-statically). Therefore, the uplink transmission of the terminal may be delayed.

For example, the terminal may not be able to perform uplink transmission in downlink symbol(s) and idle symbol(s) arranged at a start part of the second slot. On the other hand, when the terminal succeeds in CCA in the idle period of the first uplink FFP, the terminal may initiate a COT in the second uplink FFP, and may transmit an uplink signal from a start part of the COT of the second uplink FFP. For example, the terminal may perform uplink transmission after the idle period of the second slot. For the uplink transmission of the terminal, the COT initiated by the base station need not be shared with the terminal. Accordingly, the time delay of the uplink transmission of the terminal may be reduced.

In an exemplary embodiment, when a slot format is configured to the terminal, a start period (e.g., a symbol set including at least the first symbol) of the uplink FFP (or COT) may be an uplink symbol (e.g., uplink symbol configured semi-statically, uplink symbol configured by SFI) or a flexible symbol (e.g., flexible symbol configured semi-statically, flexible symbol configured by SFI). The terminal may not expect that a start period (e.g., the symbol set including at least the first symbol) of the uplink FFP (or COT) is a downlink symbol (e.g., downlink symbol configured semi-statically, downlink symbol configured by SFI). The base station may configure the uplink FFP and/or slot format to the terminal so that the start period (e.g., the symbol set including at least the first symbol) of the uplink FFP (or COT) becomes an uplink symbol or a flexible symbol.

In addition, a symbol in which an SS/PBCH block is transmitted may not be configured as the start period (e.g., the symbol set including at least the first symbol) of the uplink FFP (or COT). Here, the symbol in which an SS/PBCH block is transmitted may refer to a `symbol in which an SS/PBCH block is actually transmitted' or a `symbol configured by the base station as a symbol in which an SS/PBCH block is actually transmitted' . The terminal may receive the SS/PBCH block by performing rate matching of a PDSCH with respect to the SS/PBCH block. In addition, a symbol in which a type 0 PDCCH CSS set is configured may not be configured as the start period (e.g., the symbol set including at least the first symbol) of the uplink FFP (or COT). The type 0 PDCCH CSS set may be configured to the terminal through a PBCH or cell-specific RRC signaling.

Alternatively, when the start period (e.g., the symbol set including at least the first symbol) of the uplink FFP (or COT) is a symbol configured as a downlink symbol, a symbol in which an SS/PBCH block is transmitted, and/or a symbol in which the type 0 PDCCH CSS set is configured, the terminal may not perform a channel access operation and/or a COT initiation operation for the corresponding uplink FFP. When the start period (e.g., the symbol set including at least the first symbol) of the uplink FFP (or COT) is a symbol configured as a downlink symbol, a symbol in which an SS/PBCH block is transmitted, and/or a symbol in which the type 0 PDCCH CSS set is configured, the base station may not indicate the terminal to perform a channel access operation and/or COT initiation (e.g., dynamic indication using DCI).

In an exemplary embodiment, the terminal may perform CCA in the idle period (e.g., a sensing period, sensing slot, previous period of the next COT, etc.) regardless of the slot format of the idle period of the uplink FFP. That is, even when a format or a transmission direction of at least part (e.g., symbols corresponding to a sensing period, sensing slot, and/or a previous period of the next COT) of symbol(s) corresponding to the idle period of the uplink FFP is one of downlink, flexible, and uplink, the terminal may perform CCA in the corresponding idle period. Similarly, the base station may perform CCA in the idle period (e.g., a sensing period, sensing slot, and/or previous period of the next COT) regardless of the slot format of the idle period of the downlink FFP.

Alternatively, when the terminal performs an uplink operation in the idle period (e.g., a sensing period, sensing slot, previous period of the next COT, etc.) of the uplink FFP, the terminal may not perform CCA in the idle period. For example, when both the downlink FFP and the uplink FFP are configured to the terminal, the COT initiated by the base station in the idle period of the uplink FFP is shared with the terminal, and uplink transmission is configured (or, indicated) to be performed in the shared COT, the terminal may not perform a sensing operation in the corresponding idle period. The uplink FFP may be an uplink FFP in which the corresponding channel(s) is not occupied by the terminal. Alternatively, the uplink FFP may be an uplink FFP in which the corresponding channel(s) is occupied by the terminal and the COT is initiated by the terminal.

Specifically, when an uplink operation is performed in the idle period of the uplink FFP or at least part of a sensing slot in the idle period, the terminal may not perform CCA in the corresponding period. Similarly, when switching from downlink to uplink or switching from uplink to downlink is performed in the idle period of the uplink FFP (e.g., a sensing period, sensing slot, previous period of the next COT, etc.), the terminal may not perform CCA in the idle period. A switching time may be predefined in the technical specification. In addition, when an inter-frequency or inter-cell measurement operation is performed in the idle period (e.g., a sensing period, sensing slot, previous period of the next COT, etc.) of the uplink FFP or when the terminal is configured to perform an inter-frequency or inter-cell measurement operation in the idle period of the uplink FFP, the terminal may not perform CCA in the idle period. In the above-described cases, the terminal may not be able to occupy a channel in the next FFP of the FFP in which the CCA is skipped.

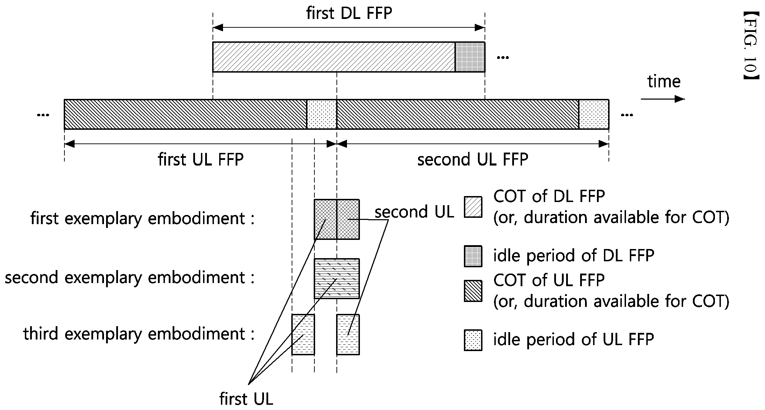

FIG. 10 is a conceptual diagram illustrating exemplary embodiments of an uplink FFP initiation method of a terminal.

Referring to FIG. 10, a terminal may receive configuration information of uplink FFP(s) from a base station, and may perform an operation as an initiating node in a channel of the uplink FFP. In addition, the terminal may receive configuration information of downlink FFP(s) from the base station, and may perform an operation as a receiving node in a channel of the downlink FFP. A boundary of the uplink FFP and a boundary of the downlink FFP may not be aligned with each other. Channel access and transmission operations based on both the uplink FFP and the downlink FFP will be described below.

The terminal may perform a channel sensing operation in an idle period of a first uplink FFP in order to initiate a COT in a second uplink FFP. Performing first uplink transmission in an idle period of the first uplink FFP may be configured (e.g., indicated) to the terminal. In this case, the terminal may perform first uplink transmission. A COT initiated by the base station in a first downlink FFP may be shared with the terminal, and the terminal may perform the first uplink transmission based on the shared COT. In this case, based on the above-described method, the terminal may not perform a sensing operation for COT initiation of the second uplink FFP in the idle period of the first uplink FFP, and may not initiate a COT in the second uplink FFP.

In the first and second exemplary embodiments shown in FIG. 10, the first uplink transmission may be overlapped with a period (e.g., sensing period, sensing slot) in which the terminal actually performs a sensing operation in the idle period of the first uplink FFP. In the third exemplary embodiment shown in FIG. 10, the first uplink transmission may overlap with the idle period of the first uplink FFP, and the first uplink transmission may not be overlapped with the period (e.g., sensing period, sensing slot) in which the terminal actually performs a sensing operation. In this case, as another method, the terminal may perform a sensing operation in the above-described period, and initiate a COT in the second uplink FFP based on a result of the sensing operation.

In the first exemplary embodiment shown in FIG. 10, the first uplink transmission and second uplink transmission may be continuous. Alternatively, a gap between the first uplink transmission and the second uplink transmission may be less than or equal to a reference value (e.g., 16 µs). In this case, the terminal may form a specific gap between the first uplink transmission and the second uplink transmission, and may not transmit a signal in the gap period. The terminal may perform a channel sensing operation in the gap period, and may initiate a COT in the next uplink FFP. The gap period may be a part of a period for the first uplink transmission (e.g., the last partial period of the first uplink transmission). That is, the terminal may skip transmission in a part of the period for the first uplink transmission. The base station may indicate (e.g., configure) the terminal to perform the above-described operation through a signaling procedure. The length of the gap period may correspond to a reference value (e.g., 16 µs). Alternatively, the length of the gap period may be a value separate from the reference value. For example, the length of the gap period may be defined as a value larger than the reference value. Alternatively, the length of the gap period may be set by the base station.

Performing uplink transmission in a start period (e.g., symbol set including at least the first symbol) of the uplink FFP (or COT) may be configured (e.g., indicated) to the terminal. In this case, the terminal may initiate a COT and may perform uplink transmission in the initiated COT. The uplink transmission may be valid uplink transmission (e.g., uplink transmission in which the terminal normally performs a transmission operation). The uplink transmission may be included in the corresponding uplink FFP (or COT). The uplink transmission may be semi-statically configured uplink transmission (e.g., configured grant PUSCH, periodic PUCCH, periodic/semi-persistent SRS, PRACH, etc.). Alternatively, the uplink transmission may be uplink transmission (e.g., PUSCH, PUCCH, SRS, etc.) scheduled by a dynamic grant. The uplink transmission may refer to PUSCH transmission corresponding to one configured grant PUSCH resource. In case of repetitive transmission, the uplink transmission may refer to each repetition (e.g., each PUSCH instance, each PUCCH instance).

On the other hand, even when performing uplink transmission in the start period (e.g., the symbol set including at least the first symbol) of the uplink FFP (or COT) is configured (e.g., indicated) to the terminal, if the uplink transmission is not valid, the terminal may not initiate the corresponding COT. For example, when the period of the uplink transmission includes a downlink symbol and/or flexible symbol or when the period of the uplink transmission overlaps with an idle period in which uplink transmission cannot be performed, the uplink transmission may be regarded as invalid.

When performing uplink transmission in the start period (e.g., the symbol set including at least the first symbol) of the uplink FFP (or COT) is not configured (e.g., indicated) to the terminal, the terminal may not initiate the corresponding COT. In addition, when performing uplink transmission in the start period (e.g., the symbol set including at least the first symbol) of the uplink FFP (or COT) is not configured (e.g., indicated) to the terminal, the terminal may not expect to be indicated (e.g., through dynamic indication using DCI) by the base station to perform a channel access operation and/or COT initiation for the corresponding uplink FFP.

Additionally or alternatively, when performing a downlink reception operation and/or an operation for switching between downlink and uplink in the start period (e.g., the symbol set including at least the first symbol) of the uplink FFP (or COT) is configured (e.g., indicated) to the terminal, the terminal may not initiate the corresponding COT. In addition, when performing a downlink reception operation and/or an operation for switching between downlink and uplink in the start period (e.g., the symbol set including at least the first symbol) of the uplink FFP (or COT) is configured (e.g., indicated) to the terminal, the terminal may not expect to be indicated (e.g., through dynamic indication using DCI) by the base station to perform a channel access operation and/or COT initiation for the corresponding uplink FFP.

In the above-described operation, the terminal may not initiate a COT even when the sensing operation is successful in a previous uplink idle period. Alternatively, in the above-described case, the terminal may skip the sensing operation in the previous uplink idle period. The uplink transmission may include transmission of a PUSCH, PUCCH, SRS, DM-RS, and the like. In addition, the uplink transmission may include transmission of a PRACH.

Meanwhile, as described above, both the base station and the terminal may perform an operation as a transmitting node in the channel(s). The channel access operation based on the downlink FFP and the channel access operation based on the uplink FFP may be performed together or simultaneously. The terminal (or base station) may initiate a COT in a specific period, may transmit a signal in the initiated COT, may acquire a shared COT initiated by the base station (or terminal) in another period, and may transmit a signal in the shared COT.

The base station may configure a downlink FFP and/or an uplink FFP to the terminal. That is, the terminal may receive information on the downlink FFP and/or information on the uplink FFP from the base station. The downlink FFP and/or uplink FFP configured to the terminal may be activated or deactivated through signaling (e.g., MAC CE signaling, DCI signaling, RRC signaling, etc.) from the base station. The base station and the terminal may perform a channel access operation based on the activated FFP. The above-described method may be referred to as (Method 210). Unless otherwise noted in exemplary embodiments, operations and configurations related to the downlink FFP and the uplink FFP may be applied to the same channel(s).

Downlink FFPs and uplink FFPs may be aligned with each other. The boundaries of the downlink FFPs may temporally coincide with the boundaries of the uplink FFPs. On the other hand, the downlink FFPs and the uplink FFPs may not be aligned with each other. For example, a time offset may be configured between the downlink FFPs and the uplink FFPs. The time offset may be a time interval (or information corresponding to the time interval) from a reference time to a start time of any one downlink FFP or any one uplink FFP. Different time offsets from the reference time may be applied to the downlink FFP and the uplink FFP. The reference time may be a boundary of even-numbered radio frames. Alternatively, the reference time may be a boundary of every radio frame. Different reference times may be applied to the downlink FFP and the uplink FFP. The time offset of the downlink FFP may be fixed to 0. On the other hand, the time offset of the uplink FFP may have various values. For example, the time offset of the uplink FFP may be set to A symbol(s) and/or B slot(s). Each of A and B may be a natural number.

In this case, the symbol(s) and/or slot(s) may be symbol(s) and/or slot(s) according to a specific bandwidth part (hereinafter, referred to as `reference bandwidth part') and numerology (hereinafter referred to as 'reference numerology') configured to the corresponding carrier. Different numerologies (e.g., subcarrier spacings and/or CP lengths) may be configured to a plurality of bandwidth parts configured in one carrier, and a specific bandwidth part of the plurality of bandwidth parts may be used as the reference bandwidth part. For example, the reference bandwidth part and/or the reference numerology (or reference subcarrier spacing) may be configured by the base station to the terminal. The reference bandwidth part and/or the reference numerology may be transmitted to the terminal together with FFP configuration information (e.g., configuration information of the uplink FFP).

For another example, the reference bandwidth part and/or the reference numerology (or reference subcarrier spacing) may be determined by a predefined condition. For example, the reference bandwidth part may be a bandwidth part having the smallest (or largest) subcarrier spacing in the carrier. When bandwidth parts having the same subcarrier spacing and different CP lengths are configured, a bandwidth part having a normal CP (or extended CP) may be determined as the reference bandwidth part. The reference bandwidth part may be a downlink bandwidth part or an uplink bandwidth part. When a downlink bandwidth part and an uplink bandwidth part have different numerologies, the reference bandwidth part may be determined as a downlink bandwidth part or an uplink bandwidth part according to a predetermined condition (e.g., a bandwidth part having the smallest (or largest) subcarrier spacing).

In addition, periods (or periodicities) of a downlink FFP and an uplink FFP may be the same. Alternatively, periods of a downlink FFP and an uplink FFP may be different from each other. A multiple relationship may be established between periods of a downlink FFP and an uplink FFP. For example, when a period of a downlink FFP (or a period of an uplink FFP) is P ms, a period of an uplink FFP (or a period of a downlink FFP) may be N×P ms. P may be a positive number, and N may be a natural number. The above-described multiple relationship may be established between a period of a downlink FFP and a period of an uplink FFP applied to the same channel(s). According to the above-described method, the operation and implementation complexity of the base station and the terminal in the FBE operation scheme may be reduced.

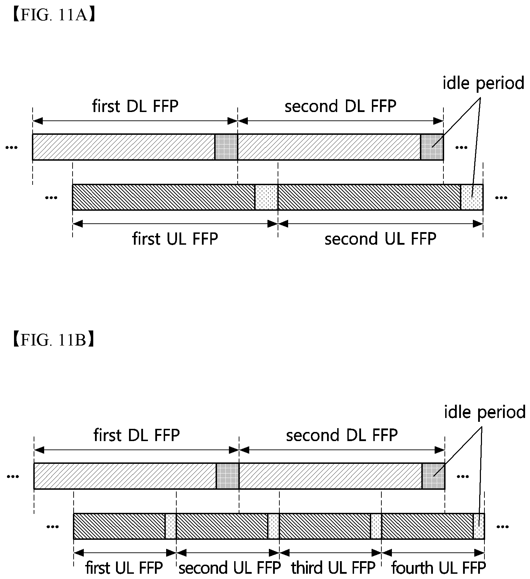

FIG. 11A is a conceptual diagram illustrating a first exemplary embodiment of a method for configuring a downlink FFP and an uplink FFP, and FIG. 11B is a conceptual diagram illustrating a second exemplary embodiment of a method for configuring a downlink FFP and an uplink FFP.

Referring to FIGS. 11A and 11B, a downlink FFP and an uplink FFP for channel(s) may be configured to the terminal. The downlink FFP and the uplink FFP may not be aligned with each other. In the exemplary embodiment shown in FIG. 11A, the periodicities of the downlink FFP and the uplink FFP may be the same. In the exemplary embodiment shown in FIG. 11B, the periodicities of the downlink FFP and the uplink FFP may be different from each other. The periodicity of the uplink FFP may be a half of the periodicity of the downlink FFP. The periodicity of the downlink FFP may be an integer multiple of the periodicity of the uplink FFP. Additionally or alternatively, the periodicity of the uplink FFP may be an integer multiple of the periodicity of the downlink FFP.

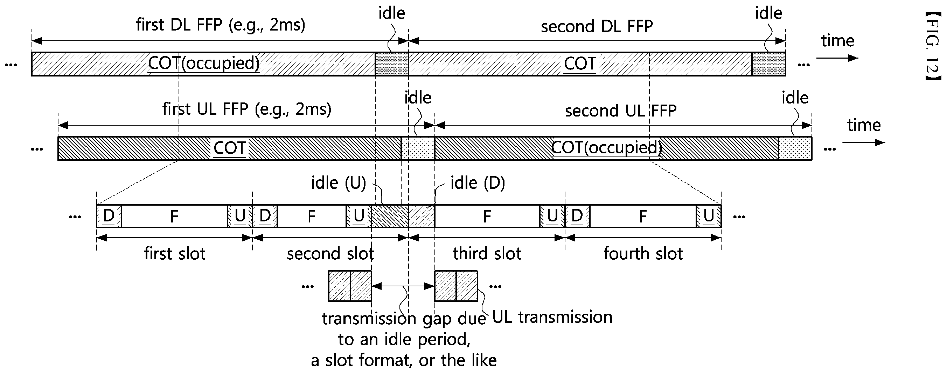

FIG. 12 is a conceptual diagram illustrating a third exemplary embodiment of a method for uplink transmission near an FFP boundary.

Referring to FIG. 12, a terminal may transmit an uplink signal in an uplink symbol and/or a flexible symbol of a slot. The terminal may receive configuration information of a slot format from the base station, and may receive configuration information of downlink FFP(s) and uplink FFP(s). The downlink FFP and the uplink FFP may have the same periodicity, and a time offset may exist between the downlink FFP and the uplink FFP. For example, a k-th downlink FFP may precede an l-th uplink FFP by a predetermined time (e.g., several symbols), k and 1 may be natural numbers or integers greater than or equal to 0. Within a unit time, k and 1 may be the same or different from each other.

For example, a boundary of the downlink FFP (e.g., a boundary between first and second downlink FFP) may be aligned with a slot boundary (e.g., a boundary between second and third slots), and a boundary of the uplink FFP (e.g., a boundary between first and second uplink FFP) may be located in the middle of a slot (e.g., the third slot). An idle period of the downlink FFP and an idle period of the uplink FFP may overlap with each other.

The terminal may not perform uplink transmission in the idle period (or, idle symbol(s)) and/or downlink symbol(s) (e.g., downlink symbol(s) configured semi-statically). In this case, the uplink transmission may be delayed. For example, the terminal may not be able to perform uplink transmission in idle symbol(s) arranged in an end part of the second slot and/or a start part of the third slot. On the other hand, when the terminal succeeds in CCA in the idle period of the first uplink FFP, the terminal may initiate a COT in the second uplink FFP, and may transmit an uplink signal from a start part of the COT of the second uplink FFP. For example, the terminal may perform uplink transmission after the idle period and/or a downlink period of the third slot. The COT initiated by the base station for transmission of an uplink signal may not need to be shared with the terminal. Therefore, the time delay of uplink transmission may be reduced.

In an exemplary embodiment, the idle period of the downlink FFP may precede the idle period of the uplink FFP. In this case, a CCA operation for the base station to initiate a COT may precede a CCA operation for the terminal to initiate a COT. Accordingly, the base station may arbitrarily determine whether to perform the CCA operation, and the CCA of the terminal may succeed or fail depending on whether the base station performs the CCA operation and/or occupies a channel. The base station may initiate a COT of the next FFP if it desires. That is, the base station may determine a communication node (e.g., base station, terminal) initiating a COT.

The terminal may periodically perform an uplink FFP-based LBT operation. That is, the terminal may perform a channel sensing operation in an idle period of every uplink FFP, and may initiate a COT when the channel sensing operation is successful. In addition, the terminal may perform uplink transmission in a start part of the COT initiated by the terminal. The base station may configure (e.g., indicate) the terminal to periodically (or, mandatorily) perform the LBT operation for each uplink FFP. Alternatively, the base station may configure (e.g., indicate) the terminal to (mandatorily) perform an LBT operation for a specific uplink FFP(s). In other words, the base station may configure (e.g., indicate) the terminal not to perform an LBT operation for the specific uplink FFP(s). The terminal may perform the LBT operation based on configuration or indication from the base station, and may initiate a corresponding COT when the LBT operation is successful. The above-described method may be referred to as (Method 220).

The terminal may determine whether to apply (Method 220) through a signaling procedure from the base station. When (Method 220) is not applied, the terminal may perform an LBT operation for all uplink FFPs, and may occupy the corresponding COT when the sensing operation (e.g., LBT operation) is successful. With respect to channel(s), the terminal may arbitrarily determine whether to perform an LBT operation for an uplink FFP to which (Method 220) is not applied. In exemplary embodiments, the terminal may receive configuration information of a plurality of uplink FFPs from the base station. That is, a plurality of uplink FFPs may be configured to the terminal. Information on a period, a time offset, a length of a COT period, and/or a length of an idle period of each uplink FFP may be independently configured. In this case, the above-described methods may be applied to each uplink FFP. For example, whether (Method 220) is applied may be configured for each uplink FFP. (Method 220) may not be applied to the first uplink FFP configured to the terminal, and the terminal may perform an LBT operation for all FFPs. (Method 220) may be applied to the second uplink FFP configured to the terminal, and the terminal may selectively perform an LBT operation for the FFP(s) configured (or indicated) by the base station. The information for configuring (or indicating) a specific uplink FFP(s) may include an indicator (e.g., an index of an uplink FFP configuration) for classifying a plurality of uplink FFP configurations.

(Method 220) may be used in combination with a specific condition. For example, when a period in which the CCA is to be performed for the channel(s) (e.g., channel sensing period) and/or a COT period of the uplink FFP to be initiated through the CCA includes the COT initiated by the base station (or the COT shared by the base station), the terminal may not perform the corresponding LBT operation. Even when it is configured to perform the LBT operation mandatorily in the FFP and/or channel(s), the terminal may not perform an LBT operation in the corresponding FFP and/or channel(s) if a specific condition (e.g., the inclusion relationship with the period of the COT shared by the base station) is satisfied or is not satisfied.

In exemplary embodiments, when the base station initiates a COT for the channel(s) or when the terminal determines that the base station initiates a COT for the channel(s), the terminal may not initiate a COT in a period overlapping the corresponding COT. In the exemplary embodiment shown in FIG. 12, when the base station initiates the COT of the second downlink FFP, the terminal may not initiate the COT of the second uplink FFP. When the sensing period (e.g., the entire uplink idle period, a part of the uplink idle period) for initiating the uplink COT and/or at least a part of the corresponding uplink COT overlap the period of the COT shared by the base station or when the sensing period for initiating the uplink COT and/or at least a part of the corresponding uplink COT belongs to the period of the COT shared by the base station, the terminal may not perform the corresponding LBT operation.

The above-described operation may be applied also when it is configured to the terminal to mandatorily perform the LBT operation for the uplink COT by (Method 220). In this case, a predetermined time (e.g., the above-described COT acquisition processing time) required for the terminal to determine whether the base station initiates (or occupies) the downlink COT may have to be secured. To support this operation, a time offset between a start time of the downlink FFP and a start time of the uplink FFP may be configured to be a sufficiently large value (e.g., a predetermined time including a COT acquisition signal reception time and/or a COT acquisition processing time).

Conversely, when the terminal initiates a COT for the channel(s) or when the base station determines that the terminal initiates a COT for the channel(s), the base station may not initiate a COT in a period overlapping the corresponding COT. When a sensing period for initiating a downlink COT (e.g., the entire downlink idle period, a part of the downlink idle period) and/or at least a part of the downlink COT overlaps a period of the COT shared by the terminal or when a sensing period for initiating a downlink COT and/or at least a part of the corresponding downlink COT belongs to a period of a COT shared by the terminal, the base station may not perform the corresponding LBT operation. In this case, a time offset between a start time of the uplink FFP and a start time of the downlink FFP may be configured to be a sufficiently large value (e.g., a predetermined time including a COT acquisition signal reception time and/or a COT acquisition processing time, etc.). The above-described methods may be used in combination with (Method 220). Alternatively, the above-described methods may be used independently without being combined with (Method 220).

Meanwhile, in the FFP operation scheme, a COT occupied by a communication node (e.g., base station, terminal) may be terminated early. The base station or the terminal may release a channel(s), LBT subband(s), and/or RB set(s) occupied by the base station or the terminal earlier than an end time of the COT (e.g., before a start time of an idle period). A transmitting node (e.g., base station or terminal) may inform a receiving node (e.g., terminal or base station) of information on the release time (e.g., end time). When the transmitting node is a base station, information on the release time of the COT may be transmitted to the terminal by dynamic signaling (e.g., DCI, group-common DCI, DCI format 2_0, etc.).

The information on the release time may include information on the remaining time of the COT. For example, the information on the remaining time of the COT may include information on a time (e.g., number of symbols) from a time (e.g., a slot in which the DCI is received, a symbol in which the DCI is received, or a first symbol of the slot in which the DCI is received) at which DCI including the information on the remaining time of the COT is received to the release time (e.g., end symbol of the COT) of the COT. Alternatively, the information on the release time may include information on the release time of the COT (e.g., the end symbol of the COT). Alternatively, information on the release time may be obtained from a slot format indicator (SFI). For example, the terminal may regard the last slot (e.g., the last symbol of the last slot) indicated by the SFI as the COT release time of the base station.

When information on the COT release time is not received from the transmitting node (e.g., base station or terminal), the receiving node (e.g., terminal or base station) may regard that the corresponding COT is terminated before a start time of an idle period. Alternatively, when information on the COT release time is not received from the transmitting node, the receiving node may not make any assumption on the end time of the corresponding COT. In this case, the terminal may not know the end time of the COT initiated by the base station. Alternatively, when the information on the release time of the COT is not received from the transmitting node, the receiving node may regard that the transmitting node does not occupy the corresponding COT, and may initiate a COT within the corresponding FFP period.

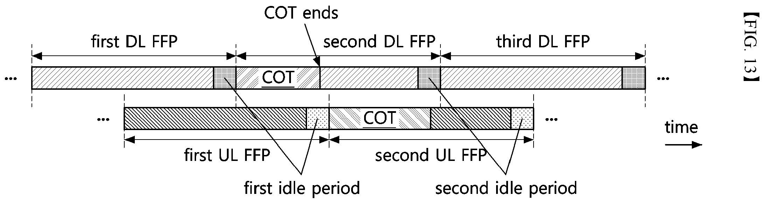

FIG. 13 is a conceptual diagram illustrating a first exemplary embodiment of a channel access method when a downlink FFP and an uplink FFP coexist.

Referring to FIG. 13, a terminal may receive configuration information of both a downlink FFP(s) and an uplink FFP(s) for channel(s) from a base station. That is, both a downlink FFP and an uplink FFP for channel(s) may be configured to the terminal. A start time of the downlink FFP and a start time of the uplink FFP may be configured differently. A channel access and transmission operation by the downlink FFP may be performed simultaneously with a channel access and transmission operation by the uplink FFP. The base station may perform an LBT operation in an idle period of the first downlink FFP (e.g., the first downlink idle period), and may acquire a COT in the second downlink FFP. The base station may transmit a downlink transmission burst from a start time point of the second downlink FFP.

In this case, the base station may terminate the COT early based on the above-described method. The base station may not occupy the channel acquired in the second downlink FFP until a preconfigured end time (e.g., the end time of the COT determined by the FFP configuration, the last symbol not overlapping with the second downlink idle period among symbols constituting the second downlink FFP) of the COT. That is, the base station may release the COT before the preconfigured end time.

The base station may release the COT acquired in the second downlink FFP before a start time of the second uplink FFP (or a start time of the first uplink idle period, a start time of a sensing slot in the first uplink idle period). In other words, the COT end time of the second downlink FFP may precede the start time of the second uplink FFP (or, the start time of the first uplink idle period, the start time of the sensing slot in the first uplink idle period). The base station may inform the terminal of information on the COT release time of the second downlink FFP. For example, the base station may signal information on the COT release time to the terminal through DCI within the COT of the second downlink FFP. When the COT initiated by the base station is terminated early, the base station may not perform communication based on the COT in the idle period of the downlink FFP, and the terminal may not perform communication based on the corresponding COT in the idle period of the downlink FFP.

According to the information on the COT release time received from the base station, the terminal may regard that the base station does not occupy the channel during the remaining period of the second downlink FFP (e.g., the start period of the second uplink FFP, the idle period of the first uplink FFP, and/or the sensing slot period in the idle period of the first uplink FFP). Accordingly, the terminal may perform the LBT operation in the idle period of the first uplink FFP, and when the sensing operation (e.g., LBT operation) is successful, the terminal may acquire a COT for the corresponding channel in the second uplink FFP.

The terminal may acquire information on the COT end time point the base station in the downlink FFP for the channel(s). When the sensing slot for the uplink FFP (or the entire idle period before the sensing slot) exists outside the COT initiated by the base station (e.g., after the end time of the COT), the terminal may initiate a COT in the uplink FFP. On the other hand, the terminal may receive a downlink transmission burst in the downlink FFP for the channel(s), and may not receive information on the end time of the corresponding COT. In this case, the terminal may assume that the COT initiated by the base station includes the entire period excluding the idle period of the corresponding downlink FFP, and may not perform an LBT operation in the uplink idle period overlapping the corresponding COT (e.g., the sensing slot within the uplink idle period).

When the transmitting node is the terminal, information on the release time of the COT initiated by the terminal may be transmitted to the base station by dynamic signaling (e.g., UCI, CG-UCI, etc.). The information on the COT release time may be transmitted to the base station through a PUSCH and/or PUCCH. If it is determined that a start time of the next FFP (or the previous idle period of the next FFP, the sensing slot period within the previous idle period of the next FFP) exists in outside the COT of the terminal based on the information on the COT release time, the base station may perform an LBT operation for the corresponding FFP, and may occupy the channel according to a result of the LBT operation.

The base station may configure (e.g., indicate) the terminal to early release the COT initiated by the terminal. For example, the base station may transmit information related to the end time (e.g., a specific symbol in the FFP) of the COT initiated by the terminal to the terminal, and the terminal may terminate the COT at the time indicated by the information on the end time of the COT. The information related to the COT end time may be transmitted to the terminal through a signaling procedure with the base station (e.g., RRC signaling procedure, DCI signaling procedure, etc.). For example, the information related to the COT end time may be transmitted to the terminal through DCI together with information indicating the terminal to initiate the COT.

The operation of releasing the COT by the terminal may be applied to all uplink FFPs. Alternatively, the operation of releasing the COT by the terminal may be applied to a specific uplink FFP(s). The specific uplink FFP(s) may be dynamically indicated by DCI. Alternatively, the specific uplink FFP(s) may be semi-statically and/or periodically configured by RRC signaling. The COT end time of the terminal may not be later than a reference time (e.g., a start time of the next downlink FFP, a start time of the idle period before the next downlink FFP, a start time of a sensing slot in the idle period before the next downlink FFP). For example, in the exemplary embodiment shown in FIG. 13, the base station may indicate (e.g., configure) the terminal to early release the COT of the second uplink FFP. In this case, the COT end time may not be later than a start time of the third downlink FFP (or, a start time of the idle period of the second downlink FFP, a start time of a sensing slot in the idle period of the second downlink FFP). According to the above-described method, the initiation of the COT by the base station may not be interrupted by the COT of the terminal. When the terminal terminates the COT early, the terminal may not perform communication based on the COT initiated by the terminal in the idle period of the uplink FFP, and the base station may not perform communication based on the COT shared by the terminal in the idle period of the uplink FFP.

Alternatively, in the COT initiated by the transmitting node, the receiving node may perform a channel sensing operation and may initiate a COT according to a result of the channel sensing operation. That is, the COT initiated by the base station and the COT initiated by the terminal may overlap with each other.

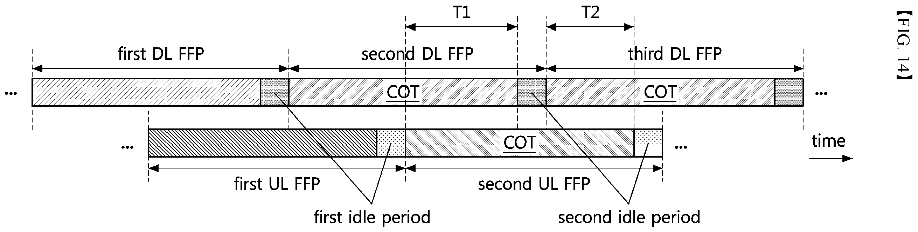

FIG. 14 is a conceptual diagram illustrating a second exemplary embodiment of a channel access method when a downlink FFP and an uplink FFP coexist.

Referring to FIG. 14, a terminal may receive configuration information of both a downlink FFP(s) and an uplink FFP(s) for channel(s) from a base station. That is, both a downlink FFP and an uplink FFP for channel(s) may be configured to the terminal. A start time of the downlink FFP and a start time of the uplink FFP may be configured differently. A channel access and transmission operation by the downlink FFP may be performed simultaneously with a channel access and transmission operation by the uplink FFP.

The base station may initiate a COT in a second downlink FFP. In this case, based on the above-described method, the terminal may perform a channel sensing operation for the second uplink FFP within a COT of a second downlink FFP initiated by the base station, and when the channel is determined to be in the idle state, the terminal may initiate a COT in the second uplink FFP. As a result, the COT initiated by the base station and the COT initiated by the terminal may overlap each other in a period T1. At the same time, the terminal may acquire sharing of the COT of the second downlink FFP, that is initiated by the base station.

In this case, transmission within the period T1 (or transmission including at least a part of the period T1) may be regarded as transmission within the shared COT. That is, for the transmission within the period T1 (or transmission including at least a part of the period T1), the shared COT may be applied preferentially to the COT initiated by the terminal. In other words, when a transmission is confined in the shared COT and/or when the terminal acquires the shared COT, the terminal may perform the transmission based on the shared COT. When the transmission is not confined in the shared COT and the transmission is included in the COT initiated by the terminal, the terminal may perform the transmission based on the COT initiated by the terminal. The above-described operation may be generally performed even when the transmission is not confined in the period T1.

Alternatively, transmission within the period T1 (or transmission including at least a part of the period T1) may be regarded as transmission within the COT initiated by the terminal. That is, for the transmission within the period T1 (or transmission including at least a part of the period T1), the COT initiated by the terminal may be applied preferentially over the shared COT. In other words, when a transmission is included in the COT initiated by the terminal, the terminal may perform the transmission based on the COT initiated by the terminal. When the transmission is not included in the COT initiated by the terminal, if the transmission is included in the shared COT and/or if the terminal acquires the shared COT, the terminal may perform the transmission based on the shared COT. The above-described operation may be generally performed even when the transmission does not belong to the period T1.

As another method, the transmission within the period T1 (or transmission including at least a part of the period T1) may be regarded as transmission based on one of two COTs (e.g., the base station's COT and the terminal's COT) according to another predefined rule. For example, the transmission may be regarded as transmission based on a lately-initiated COT among two COTs (or, a lately-initiated COT among COTs initiated by the terminal) or a lately-terminated COT (or, a lately-terminated COT among COTs initiated by the terminal).

As another method, the terminal may not identify which COT among the two COTs a transmission (e.g., transmission within the period T1 or transmission including at least a part of the period T1) is based on. For example, the terminal may perform uplink transmission without identifying which COT the uplink transmission belongs to.

As another method, the terminal may determine which COT (or, a part of which COT) a transmission (e.g., transmission within the period T1 or transmission including at least a part of the period T1) is performed based on through a signaling procedure (e.g., RRC signaling, DCI, MAC-CE, etc.) from the base station. For example, the terminal may obtain information indicating to transmit a PUSCH based on one of the two COTs through an uplink grant (e.g., DCI format 0_X (X=0,1,2,...)) for scheduling the PUSCH.

In the above-described methods, an expression `a transmission is transmitted based on a specific COT', `a transmission belongs to a specific COT', or `a transmission is a transmission for a specific COT' may mean not only that the corresponding transmission is performed within a period of the specific COT, but also that the corresponding transmission is not performed in an idle period of an FFP to which the specific COT belongs. Among the above-described methods, a plurality of methods may be used as being combined.

Among the above-described methods, different methods may be applied to transmission that satisfies a specific condition and transmission that does not satisfy a specific condition, respectively. For example, when a boundary of the uplink FFP and a start time coincide, the base station and the terminal may regard uplink transmission (e.g., configured grant PUSCH, dynamic grant PUSCH, etc.) as transmission based on the COT (or shared COT) initiated by the terminal. Alternatively, the base station and the terminal may regard uplink transmission including the first symbol of the uplink FFP (e.g., configured grant PUSCH, dynamic grant PUSCH, etc.) as transmission based on the COT (or shared COT) initiated by the terminal. Transmission that does not satisfy the above-described condition may be determined to be performed based on one of the two COTs through an additional predefined rule or signaling from the base station.

For another example, when a boundary of the uplink FFP and a start time do not coincide, the base station and the terminal may regard uplink transmission (e.g., configured grant PUSCH, dynamic grant PUSCH, etc.) as transmission based on the COT (or shared COT) initiated by the terminal. Alternatively, the base station and the terminal may regard uplink transmission that does not include the first symbol of the uplink FFP (e.g., configured grant PUSCH, dynamic grant PUSCH, etc.) as transmission based on the COT (or shared COT) initiated by the terminal. Transmission that does not satisfy the above-described condition may be determined to be performed based on one of the two COTs through an additional predefined rule or signaling from the base station.

In the above-described methods, the transmission or the transmission within the period T1 (or transmission including at least a part of the period T1) may be uplink transmission (e.g., dynamic grant PUSCH, configured grant PUSCH, PUCCH, SRS, PRACH, etc.) or downlink transmission. A start time (e.g., start symbol) of the transmission within the period T1 may be included in the period T1. In general, the period T1 may mean a period in which the COT initiated by the terminal and the COT initiated by the base station (e.g., shared COT acquired by the terminal from the base station) overlap. The transmission within the period T1 (or transmission including at least a part of the period T1) may mean transmission in the overlapped period.

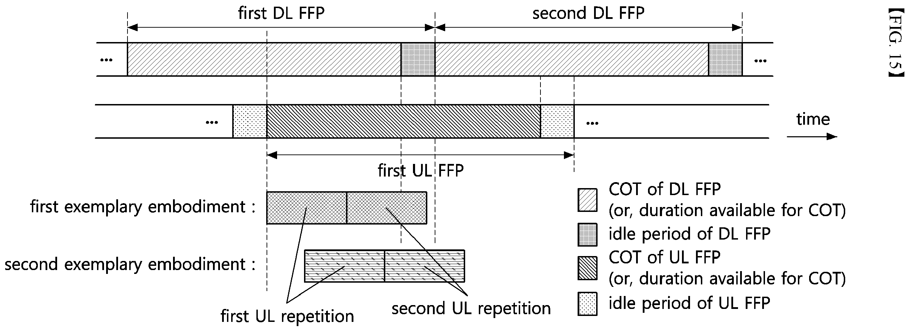

FIG. 15 is a conceptual diagram illustrating exemplary embodiments of an uplink transmission method when a downlink FFP and an uplink FFP coexist.

Referring to FIG. 15, a terminal may receive configuration information of a downlink FFP(s) and an uplink FFP(s) from a base station. That is, the downlink FFP and the uplink FFP may be configured to the terminal. A boundary of the downlink FFP and a boundary of the uplink FFP may not be aligned with each other. The base station may initiate a COT in the first downlink FFP, and the COT initiated by the base station may be shared with the terminal. The terminal may initiate a COT in the first uplink FFP for the same channel(s).

The terminal may perform uplink transmission in the corresponding channel(s). The uplink transmission may include a first repetition and a second repetition. For example, the uplink transmission may be a PUSCH, and may include a first PUSCH instance and a second PUSCH instance. The uplink transmission may be a configured grant PUSCH or a dynamic grant PUSCH. The uplink transmission may be performed in the COT initiated by the terminal and/or the COT of the base station, that is shared with the terminal. Alternatively, at least a part of the uplink transmission (e.g., at least one repetition or instance constituting the uplink transmission, the first repetition, the first PUSCH instance) may be included in both the COT initiated by the terminal and the shared COT of the base station.

According to the above-described method, the terminal may determine which COT the uplink transmission is based on. For example, in the first exemplary embodiment shown in FIG. 15, a start time of the uplink transmission may be aligned with the boundary of the uplink FFP. In this case, the terminal may perform uplink transmission based on the COT initiated by the terminal. The terminal may perform uplink transmission even in an idle period of the first downlink FFP. Accordingly, the terminal may transmit both the first and second repetitions constituting the uplink transmission. Alternatively, the terminal may perform uplink transmission based on the shared COT. In this case, the terminal may not perform uplink transmission in the idle period of the first downlink FFP. Accordingly, the terminal may transmit the first repetition constituting the uplink transmission and may not transmit the second repetition constituting the uplink transmission.

For another example, in the second exemplary embodiment shown in FIG. 15, the start time of the uplink transmission may not be aligned with the boundary of the uplink FFP. In this case, the terminal may determine which COT the uplink transmission belongs to through a predefined rule or signaling from the base station. Alternatively, in this case, the terminal may determine that the uplink transmission is based on the COT initiated by the terminal. In this case, the terminal may perform uplink transmission even in the idle period of the first downlink FFP. Accordingly, the terminal may transmit both the first and second repetitions constituting the uplink transmission.

Referring again to FIG. 14, by the above-described method, the base station may perform a channel sensing operation for the third downlink FFP within the COT of the second uplink FFP initiated by the terminal, and initiate a COT in the third uplink FFP when the channel is determined to be in the idle state. As a result, the COT initiated by the terminal and the COT initiated by the base station may overlap each other in a period T2. At the same time, the base station may acquire the shared COT of the second uplink FFP, that is initiated by the terminal. In this case, the above-described method may be applied in the same manner, and transmission within the period T2 (or transmission including at least a part of the period T2) may be performed based on one of the two COTs. For example, the transmission within the period T2 (or transmission including at least a part of the period T2) may be regarded as transmission based on the shared COT. Alternatively, the transmission within the period T2 (or transmission including at least a part of the period T2) may be regarded as transmission based on the COT initiated by the base station.

Alternatively, the transmission within the period T2 (or transmission including at least a part of the period T2) may be regarded as transmission based on one of the two COTs according to a predefined rule. For example, the transmission may be regarded as a transmission in a lately-initiated COT or a lately-terminated COT among two COTs (or a lately-initiated COT or a lately-terminated COT among COTs initiated by the base station). Alternatively, the terminal may not identify for which of the two COTs a transmission (e.g., the transmission within the period T2 or transmission including at least a part of the period T2) is. Alternatively, the terminal may determine which COT (or a part of which COT) a transmission (e.g., the transmission within the period T2 or transmission including at least a part of the period T2) is performed based on, through a signaling procedure (e.g., RRC signaling, DCI, MAC-CE, etc.) from the base station. Among the above-described methods, a plurality of methods may be used as being combined.

In the above-described methods, the transmission or the transmission within the period T2 (or transmission including at least a part of the period T2) may be a downlink transmission or an uplink transmission. A start time (e.g., start symbol) of the transmission in the period T2 may be included in the period T2. In general, the period T2 may refer to a period in which the COT initiated by the base station and the COT initiated by the terminal (e.g., shared COT acquired by the base station from the terminal) overlap. The transmission within the period T2 (or transmission including at least a part of the period T2) may refer to transmission in the overlapped period.

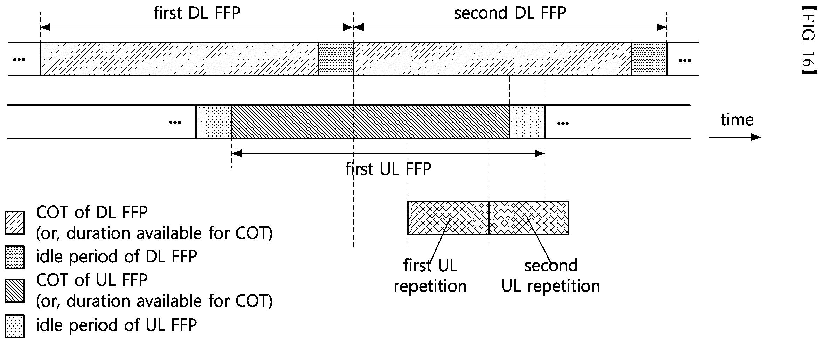

FIG. 16 is a conceptual diagram illustrating a third exemplary embodiment of an uplink transmission method when a downlink FFP and an uplink FFP coexist.

Referring to FIG. 16, a terminal may receive configuration information of a downlink FFP(s) and an uplink FFP(s) from a base station. That is, the downlink FFP and the uplink FFP may be configured to the terminal. A boundary of the downlink FFP and a boundary of the uplink FFP may not be aligned with each other. The terminal may initiate a COT in the first uplink FFP, and the COT initiated by the terminal may be shared with the base station. The base station may initiate a COT in the second downlink FFP for the same channel(s).

The terminal may perform uplink transmission in the corresponding channel(s). The uplink transmission may include a first repetition and a second repetition. For example, the uplink transmission may be a PUSCH, and may include a first PUSCH instance and a second PUSCH instance. The uplink transmission may be a configured grant PUSCH or a dynamic grant PUSCH. The uplink transmission may be performed in both the COT initiated by the terminal and/or the COT of the base station, that is shared with the terminal. At least part of the uplink transmission (e.g., at least one repetition or instance constituting the uplink transmission, the first repetition, the first PUSCH instance) may be included in both the COT initiated by the terminal and the COT of the base station, that is shared with the terminal. In this case, the terminal may determine which COT the uplink transmission is based on according to the above-described method.

When repetitive transmission is used, the uplink transmission in the above-described method may refer to all repetition(s) or all instance(s) constituting the uplink transmission. In the first and second exemplary embodiments shown in FIG. 15, the uplink transmission (e.g., PUSCH) may be fully included in the COT initiated by the terminal, and may be partially included in the COT initiated by the base station. The first repetition (e.g., the first PUSCH instance) may be included in the COT initiated by the base station, and the second repetition (e.g., the second PUSCH instance) may not be included in the COT initiated by the base station. In this case, the terminal may regard that the uplink transmission is not included in the COT initiated by the base station, and may determine which COT the uplink transmission is based on.

In the exemplary embodiment shown in FIG. 16, the uplink transmission may be fully included in the COT initiated by the base station, and may be partially included in the COT initiated by the terminal. The first repetition may be included in the COT initiated by the terminal, and the second repetition may not be included in the COT initiated by the terminal. In this case, the terminal may regard that the uplink transmission is not included in the COT initiated by the terminal, and may determine which COT the uplink transmission is based on.

In the above-described method, the uplink transmission may refer to each repetition or each instance constituting the uplink transmission. The terminal may apply the above-described method to each repetition or each instance constituting the uplink transmission. A COT corresponding to each repetition or each instance constituting the uplink transmission may be determined by a different method. In the first and second exemplary embodiments shown in FIG. 15, in order to determine COTs for the first repetition (e.g., the first PUSCH instance) and the second repetition (e.g., the second PUSCH instance) of the uplink transmission, different methods may be applied, and the first repetition and the second repetition may be transmitted based on different COTs.

For example, the terminal may transmit the first repetition of the uplink transmission based on the COT initiated by the terminal. The terminal may determine that the second repetition of the uplink transmission is based on the COT initiated by the base station (e.g., shared COT acquired from the base station), and may not transmit the second repetition. Alternatively, the terminal may not perform the second repetition at least in the idle period of the first downlink FFP. For another example, the terminal may perform the first repetition of the uplink transmission based on the COT initiated by the base station (e.g., shared COT acquired from the base station), and may perform the second repetition of the uplink transmission based on the COT initiated by the terminal.

When the COT initiated by the base station and the COT initiated by the terminal overlap with each other, there may be a possibility of contention and/or collision between uplink transmission and downlink transmission. Therefore, in order to prevent collision (or contention) between uplink and downlink, the base station may dynamically control whether the terminal performs an LBT operation for each FFP. For example, the base station may dynamically signal information on whether the terminal performs an LBT operation for each FFP (or whether to allow channel occupancy) to the terminal. The information on whether to perform an LBT operation may be included in DCI transmitted to the terminal. The terminal may determine whether to perform an LBT operation for a corresponding FFP based on the information on whether to perform an LBT operation.

Meanwhile, when a receiving node (e.g., terminal) acquires a shared COT in an FFP (e.g., downlink FFP) from a transmitting node (e.g., base station), the receiving node may not be allowed to transmit a signal in an idle period (e.g., symbol overlapping the idle period, idle symbol) of the corresponding FFP. On the other hand, when the receiving node (e.g., terminal) fails to acquire a shared COT in the FFP (e.g., downlink FFP) from the transmitting node (e.g., base station), the receiving node may be allowed to transmit a signal in the idle period (e.g., symbol overlapping the idle period, idle symbol) of the FFP. Here, an expression `a receiving node acquires a shared COT from a transmitting node' may mean that the receiving node acquires a COT and transmits a signal in the corresponding COT. An expression `a receiving node does not acquire a shared COT from a transmitting node' may mean that the receiving node fails to transmit a signal in the corresponding COT.

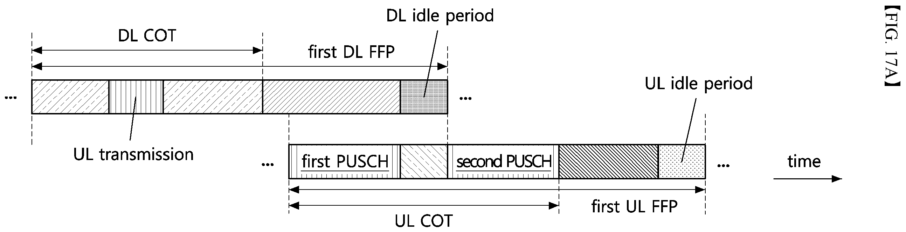

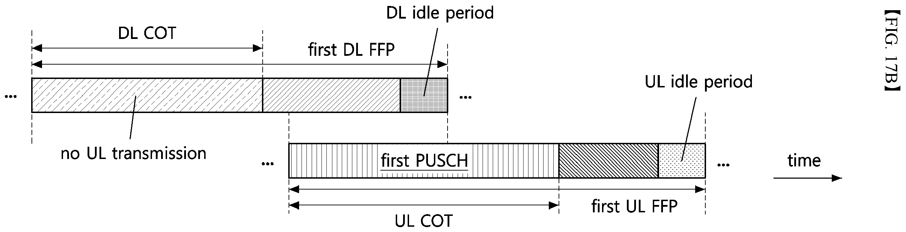

FIG. 17A is a conceptual diagram illustrating a first exemplary embodiment of a signal transmission method in an idle period, and FIG. 17B is a conceptual diagram illustrating a second exemplary embodiment of a signal transmission method in an idle period.

Referring to FIGS. 17A and 17B, a base station may initiate a COT in a first downlink FFP and may perform transmission in the initiated COT. The COT initiated by the base station may be released early. The COT initiated by the base station may be terminated before a start time of a first uplink FFP (or an idle period of the previous FFP, a sensing slot within the idle period of the previous FFP). The terminal may initiate a COT in the first uplink FFP and may perform transmission in the initiated COT. The first uplink FFP may overlap with the first downlink FFP. The terminal may transmit a PUSCH in the COT initiated by the terminal in the first uplink FFP.

In the exemplary embodiment shown in FIG. 17A, the terminal may perform uplink transmission in the COT initiated by the base station. That is, the terminal may share the COT initiated by the base station in the first downlink FFP. In this case, the terminal may not transmit a signal in the idle period of the first downlink FFP. The terminal may transmit an uplink signal (e.g., a first PUSCH and a second PUSCH) in a period excluding a period corresponding to the idle period of the first downlink FFP within the COT initiated by the terminal.

In the exemplary embodiment shown in FIG. 17B, the terminal may not perform uplink transmission in the COT initiated by the base station. That is, the terminal may not share the COT initiated by the base station in the first downlink FFP. In this case, the terminal may transmit a signal in the idle period of the first downlink FFP. The terminal may transmit an uplink signal (e.g., a first PUSCH) in a period including the period corresponding to the idle period of the first downlink FFP within the COT initiated by the terminal.

As described above, a receiving node (e.g., terminal) may dynamically determine whether to transmit a signal in an idle period of an FFP occupied by a transmitting node (e.g., base station). Transmitting or not transmitting an uplink signal (e.g., PUSCH) in a period corresponding to the idle period of the downlink FFP within the COT initiated by the terminal may be indicated (e.g., configured) to the corresponding terminal. In this case, the terminal may determine whether to transmit an uplink signal (e.g., PUSCH) in the period corresponding to the idle period of the downlink FFP until a time earlier by a predetermined time than a start time of the uplink signal (e.g., PUSCH). Here, an entity indicating (e.g., configuring) to transmit the uplink signal may be the base station (e.g., when the uplink signal is a dynamic grant PUSCH or a configured grant PUSCH) or a higher layer of the terminal (e.g., when the uplink signal is a configured grant PUSCH). The predetermined time may be a value corresponding to a time required for the terminal to prepare for PUSCH transmission (e.g., encoding time, etc.). The predetermined time may be predefined in the technical specification.

The uplink signal may be a PUSCH (e.g., PUSCH instance) according to repetitive transmission (e.g., type B repetitive transmission). For example, in the exemplary embodiment shown in FIG. 17B, the first PUSCH may be a PUSCH scheduled by the type B repetitive transmission. In this case, if a condition that the terminal does not transmit a signal in the idle period of the first downlink FFP is satisfied, the first PUSCH (e.g., nominal PUSCH) may be transmitted in a period excluding the idle period, as being changed into one or more PUSCHs (e.g., actual PUSCHs). For example, the first PUSCH (e.g., nominal PUSCH) shown in FIG. 17B may be transmitted as being segmented into the first PUSCH and the second PUSCH (e.g., actual PUSCHs) shown in FIG. 17A by the idle period of the first downlink FFP.

The idle period of the downlink FFP in which the terminal does not transmit a signal under the above-described condition may be regarded as invalid symbol(s). The PUSCH transmission operation due to the segmentation or change by the terminal may be performed when it is determined until the above-described reference time (e.g., a time earlier by a predetermined time than a start time of the PUSCH) whether the condition for the idle period of the first downlink FFP to become invalid symbol(s) is satisfied or not. When the above-described condition is not determined until the above-described reference time, the terminal may not transmit the PUSCH (e.g., nominal PUSCH).

Meanwhile, for URLLC transmission, it may be advantageous in terms of a transmission time delay that the base station and the terminal continuously occupy a channel. However, in the case of an uplink FFP, according to a type and a form of uplink transmission configured (e.g., indicated) at a start time (e.g., a symbol set including a first symbol) of the uplink FFP (or COT), initiation of a COT by the terminal may not always be guaranteed. For example, whether to transmit an uplink signal and/or a channel may be determined by a certain condition. Specifically, whether to transmit a PRACH, a PUCCH for transmitting an SR, and/or a configured grant PUSCH may be determined by the terminal (e.g., higher layer of the terminal). Even when an uplink signal and/or channel is configured at the start time of the uplink FFP, the terminal may initiate a corresponding COT only when the uplink signal and/or channel is actually transmitted. When the terminal does not transmit the uplink signal and/or channel, the terminal may not initiate the corresponding COT. In the uplink FFP, the COT of the terminal may be conditionally initiated. If the terminal does not initiate the COT, the channel may not be occupied in the FFP period, and a transmission delay may occur.

As a method for solving the above-described problem, the base station may dynamically trigger an uplink FFP in which a COT is initiated to the terminal. The terminal may receive information indicating the uplink FFP in which a COT is initiated from the base station. In this case, the terminal may perform a sensing operation for the uplink FFP indicated by the base station (e.g., a sensing operation in an idle period of the previous uplink FFP), and when the sensing operation is successful, the terminal may initiate the corresponding COT, and transmit an uplink signal at a start time of the initiated COT. The information indicating COT initiation (e.g., information indicating an uplink FFP in which a COT is initiated) may be transmitted to the terminal by an explicit method or an implicit method. The information indicating COT initiation may be transmitted by DCI. In exemplary embodiments, the information indicating COT initiation may be referred to as `COT initiation indicator'. The above-described method may be referred to as (Method 300).

In (Method 300), the uplink signal for initiating a COT may include a PUSCH by a dynamic grant. In this case, the COT initiation indicator may be an uplink grant (e.g., DCI formats 0_0, 0_1, 0_2, ...) for scheduling the PUSCH. The PUSCH may not include uplink data (e.g., UL-SCH). That is, the PUSCH may be a dummy PUSCH used only for initiating an uplink COT, not for transmitting uplink data or control information. The terminal may determine whether the scheduled PUSCH is a dummy PUSCH by analyzing a specific field value or codepoint of a specific field(s) of the uplink grant.

The uplink signal initiating a COT may include an SRS (e.g., aperiodic SRS). In this case, the COT initiation indicator may be DCI requesting or triggering the SRS. The DCI may be a downlink DCI, an uplink DCI, or a group-common DCI (e.g., DCI format 2_3). Alternatively, the DCI may have a new DCI format. The SRS may be used only for initiating an uplink COT. Alternatively, the SRS may be used not only for initiating a COT, but also for other purposes (e.g., acquisition of downlink CSI, acquisition of transmission timing-related information of the terminal, etc.). The terminal may receive configuration information of an SRS resource for aperiodic SRS transmission at the start time of the uplink FFP, and when SRS transmission is indicated, the terminal may initiate a COT by transmitting the SRS in the corresponding SRS resource. The configuration information of the SRS resource may include configuration information of a time resource (e.g., symbol(s) in which the aperiodic SRS is mapped). Alternatively, the configuration information of the SRS resource may not include configuration information of a time resource.

The uplink signal initiating a COT may include a PRACH, a PUCCH for transmitting an SR, and/or a configured grant PUSCH. When the COT initiation indicator is received from the base station, the terminal may transmit an uplink signal at the start time of the corresponding FFP. Even when transmission of a PRACH, SR, and/or configured grant PUSCH is not indicated (e.g., configured) by a higher layer to the terminal, the terminal may transmit a PRACH, PUCCH including an SR, and/or configured grant PUSCH based on the COT initiation indicator. The uplink signal may be a dummy signal used only for initiating an uplink COT. The terminal may determine whether the uplink signal is a dummy signal by analyzing a specific field value or codepoint of a specific field(s) of the DCI including the COT initiation indicator.

When the COT initiation indicator is transmitted to the terminal through DCI, the uplink FFP to which the COT initiation indicator is applied may be determined by a DCI reception processing time of the terminal or a time value corresponding to the DCI reception processing time. For example, a ' start time of the uplink FFP to which the COT initiation indicator is applied' or a 'start time of a sensing period corresponding to the start time of the uplink FFP (e.g., a start time of an idle period of the previous uplink FFP, a start time of a sensing slot of the idle period of the previous uplink FFP)' may be a time after at least a predetermined time (hereinafter, referred to as 'T') elapses from a time (e.g., the last symbol of the DCI or an end time of the last symbol of the DCI) at which the terminal receives the DCI. The value of T may be predefined in the technical specification. Alternatively, the value of T may be configured from the base station to the terminal. T may be a positive number indicating a time value. Alternatively, T may be a natural number indicating the number of symbols.

When the DCI including the COT initiation indicator (e.g., DCI corresponding to the COT initiation indicator) is transmitted in a COT of an n-th uplink FFP, an uplink FFP to which the COT initiation indication is applied may be a (n+K)-th uplink FFP. K may be a natural number. For example, K may be 1. K may be a value predefined in the technical specification. Alternatively, K may be signaled from the base station to the terminal. For example, K or information used by the terminal to determine K may be semi-statically configured to the terminal by RRC signaling. For another example, K or information used by the terminal to determine K may be included in DCI transmitted to the terminal (e.g., DCI including the COT initiation indicator). That is, K or information used by the terminal to determine K may be dynamically indicated to the terminal. In this case, if a distance between a start time of a preconfigured uplink FFP or a start time of a sensing period corresponding to a start time of an uplink FFP and a reception end time of the DCI is less than T, the terminal may apply the COT initiation indication to an earliest uplink FFP for which the time T is secured among the next uplink FFPs of the preconfigured uplink FFP. Alternatively, in this case, the terminal may ignore the COT initiation indicator. For another example, the terminal may be configured with an index (or number) of an uplink FFP within a unit time (e.g., one radio frame or two consecutive radio frames) through RRC signaling or DCI from the base station, and the terminal may initiate or may not initiate a COT for the uplink FFP having the index according to an indication of the base station.

When the DCI including the COT initiation indicator is transmitted in a COT of a downlink FFP, an uplink FFP to which the COT initiation indicator is applied may be determined according to a combination of one or more of a reception end time of the downlink FFP, a reception time of the DCI, a time (e.g., T) required for the terminal to obtain triggering of COT initiation (e.g., COT initiation indicator) by processing the DCI, a subcarrier spacing of a downlink bandwidth part, and a subcarrier spacing of an uplink bandwidth part.

Alternatively, the COT initiation indicator may include an index of an uplink FFP to which the COT initiation indication is applied or information on the index of the uplink FFP. For example, the base station may explicitly inform the terminal of an order of uplink FFP(s) to which the COT initiation indication is applied within a reference time (e.g., two radio frames) through the COT initiation indicator. Meanwhile, a time offset may be applied to uplink FFP configuration. In this case, a certain uplink FFP may be included only in part within the reference time. In this case, whether a certain uplink FFP falls within the reference time may be determined by whether a start time (e.g., start symbol) of the uplink FFP falls within the reference time.

In (Method 210), the idle period of the downlink FFP and the idle period of the uplink FFP may overlap with each other. A communication node (e.g., base station, terminal) may not perform transmission and reception in a union period of the idle period (e.g., symbol(s) corresponding to the idle period) of the downlink FFP and the idle period (e.g., symbol(s) corresponding to the idle period) of the uplink FFP. Alternatively, a communication node (e.g., base station, terminal) may not perform transmission and reception in an intersection period of the idle period (e.g., symbol(s) corresponding to the idle period) of the downlink FFP and the idle period (e.g., symbol(s) corresponding to the idle period) of the uplink FFP. The terminal may perform a reception operation in at least part (e.g., symbol(s) that do not overlap with the idle period of the downlink FFP) of the idle period (e.g., symbol(s) corresponding to the idle period) of the uplink FFP. The base station may perform a reception operation in at least part (e.g., symbol(s) that do not overlap with the idle period of the uplink FFP) of the idle period (e.g., symbol(s) corresponding to the idle period) of the downlink FFP.

When a COT of the uplink FFP starts within the idle period of the downlink FFP, the terminal may initiate the corresponding COT. As described above, when a COT of the uplink FFP starts within a COT of the downlink FFP, the terminal may initiate the COT of the uplink FFP. When a COT of the uplink FFP starts within a COT of an uplink FFP of another terminal, the terminal may initiate the COT of the corresponding uplink FFP. When a COT of the downlink FFP starts within a COT of the uplink FFP, the base station may initiate the COT of the corresponding downlink FFP. In this case, the COT initiated by the base station and the COT initiated by the terminal may overlap with each other. When an operation (e.g., transmission, reception, measurement, sensing, etc.) related to the COT of the downlink FFP and an operation (e.g., transmission, reception, measurement, sensing, etc.) related to the COT of the uplink FFP collides at the same time point in the overlapped period, a communication node (e.g., base station, terminal) may selectively perform one of the two operations.

A criterion for the communication node to select any one operation may be determined by priority. The priority may include a priority between transmission directions (e.g., priority between downlink FFP and uplink FFP, priority between downlink transmission and uplink transmission, etc.), a priority between COTs (e.g., channel access priority class used for acquisition of the COT, a transmission priority between signal(s) and channel(s) constituting the COT, etc.), a transmission priority between signal(s) and channel(s), and the like. Here, the transmission priority between signal(s) and channel(s) may refer to a transmission priority identified in a higher layer (e.g., a priority of a logical channel, quality of service (QoS), etc.), a transmission priority identified in a physical layer, or the like.

The transmission priority identified in the physical layer may mean a transmission priority assigned to a physical signal and/or channel. When transmission(s) of physical signal(s) and channel(s) having different priorities overlap, physical signal(s) and/or channel(s) having a higher priority may be transmitted preferentially, and transmission of physical signal(s) and/or channel(s) having a lower priority may be skipped. Alternatively, the physical signal(s) and/or channel(s) having a lower priority may be multiplexed in the physical signal(s) and/or the channel(s) having a higher priority, and the physical signal(s) and/or channel(s) having a lower priority may be transmitted together with the physical signal(s) and channel(s) having a higher priority. For example, the transmission priority identified in the physical layer may be configured in two levels (e.g., a first priority and a second priority). The priority may be transmitted to the terminal by an explicit method or an implicit method through physical layer signaling (e.g., a specific field value of DCI, a radio network temporary identifier (RNTI) scrambled in a CRC of a PDCCH, a search space set, or the like).

A criterion, priority, or the like for a communication node to select any one operation may be predefined in the technical specification. Alternatively, the terminal may determine a criterion, priority, or the like for selecting any one operation through a signaling procedure (e.g., RRC signaling, physical layer signaling) from the base station.

The uplink idle period and the downlink idle period configured to the terminal may overlap. When the uplink idle period and the downlink idle period fully overlap, when a sensing slot of the uplink idle period and a sensing slot of the downlink idle period overlap at least partially or fully, or when a start time (e.g., start symbol) of the uplink FFP coincides with a start time (e.g., start symbol) of the downlink FFP, the base station and the terminal may succeed in sensing the same channel at the same time point or at similar time points. In this case, a downlink transmission burst and an uplink transmission burst may collide.

In order to solve the collision problem, a restriction may be applied to configuration of the uplink FFP and the downlink FFP. For example, the terminal may expect that the uplink idle period (e.g., the sensing slot of the uplink idle period) and the downlink idle period (e.g., the sensing slot of the downlink idle period) are configured so that they do not overlap each other. Alternatively, the terminal may expect that the uplink idle period (or, the sensing slot of the uplink idle period) and the downlink idle period (or, the sensing slot of the downlink idle period) configured (e.g., indicated) to perform an LBT operation do not overlap with each other. For another example, a time offset (e.g., symbol offset) between a start time (e.g., start symbol) of the uplink FFP and a start time (e.g., start symbol) of the downlink FFP may be configured to have a non-zero value. The terminal may expect that the uplink FFP(s) and the downlink FFP(s) are configured so that a start time (e.g., start symbol) of any uplink FFP and a start time (e.g., start symbol) of any downlink FFP do not coincide. Alternatively, a time offset (e.g., symbol offset) between the start time (e.g., start symbol) of the uplink FFP and the start time (e.g., start symbol) of the downlink FFP may be configured to be greater than or equal to a reference value. For example, the reference value may be L, which is the number of symbols. L may be a natural number. The reference value may be predefined in the technical specification.

Alternatively, when collision between a downlink transmission burst and an uplink transmission burst is likely to occur, the terminal may not perform a sensing operation in the uplink idle period (e.g., the sensing slot in the uplink idle period). When it is determined that there is a possibility that the base station transmits a downlink transmission burst having a collision possibility, the terminal may not perform a sensing operation in the corresponding uplink idle period (e.g., the sensing slot in the uplink idle period). In a situation in which collision is likely to occur, the sensing operation of the base station may have priority over the sensing operation of the terminal.

Meanwhile, in the above-described case, the terminal may receive a downlink signal from the base station. There may be a possibility that the downlink signal has been transmitted based on a COT initiated by the base station. In this case, the terminal may regard that the base station initiated the COT in the downlink FFP in which the downlink signal is received, and may transmit an uplink signal by sharing the corresponding COT. Alternatively, there may be a possibility that a COT initiated by another communication node (e.g., another terminal) is shared with the base station, and the downlink signal has been transmitted based on the shared COT. In this case, it may be difficult for the terminal to regard that the base station initiated the COT in the downlink FFP in which the downlink signal is received, and it may be difficult to transmit an uplink signal in the corresponding COT period. The terminal may need to distinguish between the two possibilities described above in order to perform an appropriate operation.

As a method therefor, the base station may inform the terminal of information on whether it initiated the COT in a period in which the terminal receives downlink transmission. Additionally or alternatively, the base station may configure the remaining duration of the COT initiated by itself to a specific value (e.g., 0), and may inform the terminal of the specific value. The remaining duration of the COT notified by the base station to the terminal may not match the remaining duration of the COT actually occupied by the base station. The above-described information may be included in a group-common DCI (e.g., DCI format 2_0, etc.), and the group-common DCI may be transmitted to the terminal through a PDCCH (e.g., group-common PDCCH).

According to the above-described method (e.g., (Method 200) and (Method 210)), a time delay of the uplink transmission may be reduced and a time delay of downlink transmission may be increased. The COT initiated by the terminal may be shared with the base station, and the base station may have to receive an uplink signal from the terminal in the shared COT in order to transmit a downlink signal in the shared COT. The uplink signal received by the base station from the terminal to acquire the shared COT may be referred to as `uplink COT acquisition signal' to distinguish it from the `COT acquisition signal' received by the terminal.

An uplink physical channel (e.g., PUSCH, PUCCH, PRACH, etc.) may be used as an uplink COT acquisition signal. Additionally or alternatively, an uplink reference signal (e.g., SRS, PUSCH DM-RS, PUCCH DM-RS, PT-RS, etc.) may be used as an uplink COT acquisition signal. UCI may be used as an uplink COT acquisition signal. Since UCI may be transmitted as mapped to a small number of symbols, a time required for the base station to receive the uplink COT acquisition signal may be reduced, and a time delay of uplink transmission may be reduced.

The UCI used as the uplink COT acquisition signal may be transmitted from the terminal to the base station by using at least part of a PUSCH resource (or piggybacked on a PUSCH). Alternatively, the UCI used as the uplink COT acquisition signal may be transmitted to the base station as a part of a PUSCH. Alternatively, the UCI used as the uplink COT acquisition signal may be transmitted to the base station on a PUCCH. The UCI may include an HARQ-ACK, CSI (e.g., CSI part 1, CSI part 2), and/or an SR. The UCI may be UCI transmitted together with a configured grant PUSCH using a configured grant PUSCH resource. Alternatively, the UCI may include dummy UCI. The dummy UCI may mean UCI composed of (meaningless) information or value(s) irrelevant to operations of the base station or the terminal. Alternatively, the UCI may include new information. For example, the UCI may include information on whether uplink transmission (e.g., PUSCH, PUCCH) including the corresponding UCI is a part of the COT or CO initiated by the terminal. Alternatively, an arbitrary uplink signal may be used as an uplink COT acquisition signal.

The uplink COT acquisition signal may be transmitted at a start part of the uplink COT. Alternatively, a time period in which the uplink COT acquisition signal can be transmitted may be defined or configured. The time period in which the uplink COT acquisition signal can be transmitted may be a part of the period of the uplink COT. When UCI is used as the uplink COT acquisition signal, the UCI may be piggybacked (or multiplexed) in an arbitrary PUSCH or every PUSCH. For example, the UCI may be piggybacked in a PUSCH scheduled by a dynamic grant. The UCI may be piggybacked in a PUSCH scheduled by a configured grant. The UCI may be piggybacked in a PUSCH regardless of a temporal relationship (e.g., overlap, coexistence in a predetermined period (e.g., slot, subslot)) between a PUCCH including the UCI and the PUSCH. Alternatively, the UCI used as the uplink COT acquisition signal may be piggybacked (or multiplexed) in a PUSCH that satisfies a specific condition. For example, the UCI used as the uplink COT acquisition signal may be piggybacked in a PUSCH transmitted at least at the start part of the uplink COT. The base station may receive the UCI at the start part of the uplink COT and share the corresponding uplink COT based on the UCI.

A `COT acquisition processing time' or a `processing time for validity check of downlink transmission' for the base station may be defined. The COT acquisition processing time or the processing time for validity check of downlink transmission may be referred to as T_{proc,cot2}. T_{proc, cot2} may include a time for the base station to process (e.g., receive or detect) the received uplink COT acquisition signal, a time for determining whether the uplink COT is acquired, and/or a time for preparing for transmission of a downlink signal. When the uplink COT acquisition signal is received within the uplink COT, the base station may determine validity of downlink transmission in the uplink COT based on a relationship among a reception time of the COT acquisition signal (e.g., symbol(s) to which the uplink COT acquisition signal is mapped), a downlink transmission time (e.g., symbol(s) to which a downlink signal to be transmitted is mapped), and T_{proc,cot2}.

For example, when the uplink COT acquisition signal is received within the uplink COT, the base station may regard the downlink transmission as valid if a first symbol of the downlink transmission is not earlier than an earliest symbol after T_{proc, cot2} elapses from an end time of a last symbol in which the uplink COT acquisition signal is received. Therefore, the base station may transmit the corresponding downlink signal. The terminal may expect to receive the downlink signal from the base station after T_{proc,cot2} elapses from the end time of the last symbol of the uplink COT acquisition signal transmitted by the terminal to the base station. That is, the terminal may perform a downlink reception operation after T_{proc,cot2} elapses from the end time of the last symbol of the uplink COT acquisition signal transmitted by the terminal to the base station.

The terminal may not perform a downlink reception operation before T_{proc,cot2} elapses (or in symbols before the corresponding time) from the end time of the last symbol of the uplink COT acquisition signal transmitted by the terminal to the base station. According to the above-described method, power consumption of the terminal may be reduced. T_{proc,cot2} may be referred to as a 'downlink reception skip time (or period) of the terminal'. Here, the downlink transmission may refer to transmission of a PDCCH, PDSCH, SS/PBCH block, CSI-RS, DM-RS, PT-RS, PRS, or the like. A unit for the validity check of downlink transmission may be a resource, a resource set, an instance (e.g., in case of repetitive transmission), a symbol (e.g., when a CSI-RS resource is mapped to a plurality of symbols), and the like. T_{proc, cot2} may be predefined in the technical specification. Alternatively, T_{proc, cot2} may be configured to the terminal from the base station. For example, a higher layer signaling procedure (e.g., RRC signaling procedure) may be used to configure T_{proc,cot2}.

### [Wideband operation]

In the FBE operation scheme, when a communication node (e.g., base station, terminal) communicates using a plurality of channels, the above-described LBT operation may be independently performed for each of the plurality of channels. In this case, the plurality of channels may be included in one bandwidth part and/or one carrier. The base station and the terminal may independently perform an FFP-based LBT operation for each of the plurality of channels (e.g., a plurality of LBT subbands, a plurality of subbands, a plurality of RB sets) constituting the same bandwidth part.

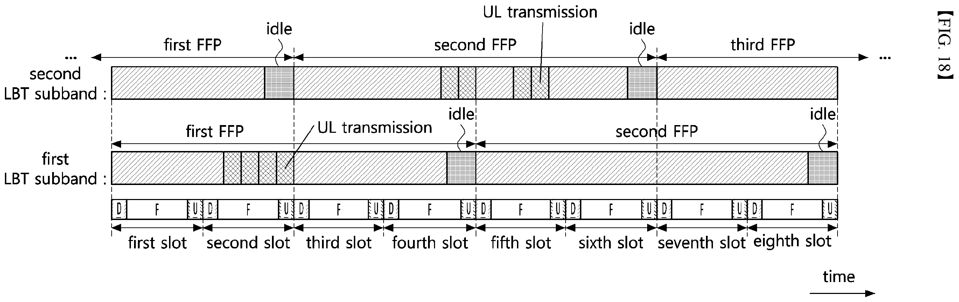

FIG. 18 is a conceptual diagram illustrating a first exemplary embodiment of a channel access method using a plurality of channels.

Referring to FIG. 18, a terminal may configure two LBT subbands (e.g., two RB sets, two subbands, two channels) based on configuration information received from a base station. The two LBT subbands may be referred to as first and second LBT subbands. The two LBT subbands may be included in one bandwidth part and/or one carrier. In addition, the terminal may receive configuration information of a slot format for the bandwidth part and/or the carrier. That is, a slot format for the bandwidth part and/or the carrier may be configured to the terminal.

In exemplary embodiments, the LBT operation of the base station and the terminal may be independently performed for each LBT subband. To support this operation, the base station may configure an FFP for each LBT subband. Here, the FFP may be a downlink FFP. Alternatively, the FFP may be an uplink FFP. The terminal may receive FFP configuration information from the base station, and may configure an FFP for each LBT subband based on the FFP configuration information. The FFP configuration information may include FFP configuration information for each LBT subband. For example, at least one of information on the FFP, a length of the FFP, an arrangement position of each FFP, an arrangement position of a COT constituting each FFP, and/or an arrangement position of an idle period constituting each FFP may be configured for each LBT subband.

For example, the information on the arrangement position of each FFP may include at least the above-described information on a time offset of the FFP, and the information on the time offset of the FFP may be configured for each LBT subband. The time offset applied to the FFP of each LBT subband may be defined from a reference time (e.g., a start time of every second or every even-numbered radio frame). A reference LBT subband (e.g., reference RB set, reference channel) may be defined (e.g., configured), and a time offset between a FFP of a specific LBT subband (e.g., specific RB set, specific channel) and a FFP of the reference LBT subband may be configured. When the specific LBT subband is the reference LBT subband, the time offset may not be configured. Alternatively, when the specific LBT subband is the reference LBT subband, the time offset may be set to 0. By the above-described method, the terminal may receive the information on the time offset from the base station, and may determine the time positions of the FFPs based on the time offset.

In exemplary embodiments, different FFP offsets may be applied between LBT subbands. In the exemplary embodiment shown in FIG. 18, an offset between an FFP of the first LBT subband and an FFP of the second LBT subband may be configured as two slots. As a result, positions of the idle period of the first LBT subband and the idle period of the second LBT subband may also be shifted by two slots. Therefore, within one bandwidth part (or carrier), a specific time may belong to an idle period in one LBT subband, and the specific time may belong to a COT (e.g., a period in which transmission is allowed) in another LBT subband. That is, a time in which transmission is impossible due to the idle period in the corresponding bandwidth part (or, the corresponding carrier) may disappear, and a downlink transmission time delay and an uplink transmission time delay may be reduced.

In the exemplary embodiment shown in FIG. 18, the terminal may not perform uplink transmission through the second LBT subband at an end part of the second slot (e.g., a period corresponding to the idle period of the second LBT subband). However, the terminal may perform uplink transmission through the first LBT subband at the end part of the second slot. The terminal may not perform uplink transmission through the first LBT subband at an end part of the fourth slot (e.g., a period corresponding to the idle period of the first LBT subband). However, the terminal may perform uplink transmission through the second LBT subband at the end part of the fourth slot.

In exemplary embodiments, the concept of the idle period may be extended in two dimensions. In a specific idle period, a signal transmission restriction may be limited to a frequency resource (e.g., channel(s)) to which the idle period belongs, and the communication node may transmit a signal in a frequency resource (e.g., other channel(s)) other than the frequency resource in which signal transmission is restricted in the corresponding time period. The idle period may be referred to (e.g., understood) as an `idle resource'. The idle resource may be a two-dimensional resource composed of time and frequency resources. An operation (e.g., transmission/reception operation, rate matching operation, puncturing operation, measurement operation, etc.) on the idle resource may be performed based on an RBsymbol unit, an RE unit, or the like. For example, the idle resource may be a resource consisting of symbol(s) overlapping with the idle period and RB(s) constituting an LBT subband (or, RB set, subband, channel) belonging to the idle period.

The terminal may rate-match a data channel (e.g., PDSCH, PUSCH) around the idle resource, and may transmit or receive the data channel (e.g., PDSCH, PUSCH). Alternatively, the terminal may perform puncturing for a data channel (e.g., PDSCH, PUSCH) in the idle resource, and may transmit or receive the data channel (e.g., PDSCH, PUSCH). The terminal may skip operations such as transmission/reception and measurement related to downlink transmission or uplink transmission overlapping with the idle resource. When a specific PDCCH candidate overlaps with the idle resource, the terminal may not perform a blind decoding operation on the specific PDCCH candidate.

When idle periods of a plurality of channels cross each other, a guard band may be inserted between two adjacent channels to ensure performance of a CCA operation performed in the idle periods. The guard band may be used only for a partial time period. For example, the guard band may be available or activated in a time period (e.g., symbol(s)) in which at least one of the two channels adjacent to the guard band belongs to an idle period. In the time period in which the guard band is available or activated, the base station and the terminal may or may not transmit or receive a signal (e.g., PDSCH, PUSCH, CSI-RS, PRS, SRS, etc.) in the guard band. In the time period in which the guard band is not available or activated, the base station and the terminal may transmit or receive a signal (e.g., PDSCH, PUSCH, CSI-RS, PRS, SRS, etc.) in the corresponding guard band. When the plurality of channels are channels belonging to the same carrier or the same bandwidth part, the guard band may be an intra-carrier guard band.

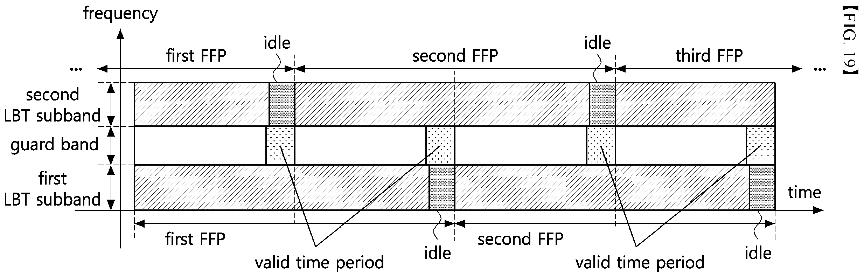

FIG. 19 is a conceptual diagram illustrating a first exemplary embodiment of a method for configuring a guard band.

Referring to FIG. 19, a terminal may receive configuration information of first and second LBT subbands from a base station. That is, the first and second LBT subbands may be configured to the terminal. The first and second LBT subbands may belong to the same bandwidth part. In addition, the terminal may receive FFP configuration information from the base station, and may configure an FFP for each LBT subband based on the FFP configuration information. The FFP configurations of the first and second LBT subbands may be the same as the exemplary embodiment shown in FIG. 18.

A guard band (e.g., intra-carrier guard band) may be arranged between the first LBT subband and the second LBT subband. By the above-described method, the terminal may receive configuration information (e.g., size, location, etc.) of the guard band and the LBT subbands within the bandwidth part from the base station. The guard band may be available or activated only in a partial time period. The available (or activated) time period of the guard band may include an idle period (e.g., symbol(s)) of at least one LBT subband. In another exemplary embodiment, the available time period of the guard band may include a part of an idle period (e.g., symbol(s)) of at least one LBT subband.

The terminal may receive information (e.g., a time pattern) on the available time period of the guard band from the base station through a signaling procedure (e.g., RRC signaling and/or physical layer signaling). The available time period of the guard band may be periodically repeated. The periodicity of the available time period pattern of the guard band and the location of the available time period within one period may be configured to the terminal. The available time period of the guard band may be configured in units of a symbol. The location of the available time period within one period may be expressed as bitmap information corresponding to symbols. When one bandwidth part includes a plurality of guard bands, an available time period of a guard band may be configured for each guard band. Information on the available time period of the guard band may be transmitted to the terminal together with information on a frequency region of the guard band. Alternatively, the information on the available time period of the guard band may be transmitted to the terminal as separate information (e.g., a separate RRC parameter). The available time period of the guard band may be configured for each carrier, and may be commonly applied to bandwidth part(s) belonging to the carrier.

Alternatively, the available time period of the guard band may be determined by a predefined rule. For example, the available time period of the guard band may be determined by the location of the idle period(s) of the LBT subband(s). Specifically, an available time period of a specific guard band may be determined by the location of idle period(s) of two LBT subband(s) adjacent to the specific guard band. The available time period of the guard band may include all or part of symbol(s) corresponding to the idle period(s).

Even when a communication node (e.g., base station, terminal) fails an LBT operation for a certain FFP (or, a COT) with respect to a certain channel(s), the corresponding communication node (e.g., base station, terminal) may transmit a discovery reference signal (DRS) or an SS/PBCH block in the corresponding FFP (or COT). That is, the DRS or SS/PBCH block may be transmitted without being based on a COT initiated by the base station and/or a COT initiated by the terminal. In this case, the DRS or SS/PBCH block may be transmitted in a period excluding a downlink idle period. When the DRS or SS/PBCH block includes a downlink idle period, the terminal may skip a reception operation and a measurement-related operation of the corresponding DRS or SS/PBCH block. Additionally or alternatively, the DRS or SS/PBCH block may be transmitted in a period excluding an uplink idle period. When a CCA succeeds in a sensing period before a transmission time of the DRS or SS/PBCH block, the base station may transmit the DRS or SS/PBCH block. Alternatively, the base station may immediately transmit the DRS or SS/PBCH block at a corresponding time without performing a channel sensing operation.

The DRS may refer to a set of signal(s) and channel(s) for initial access, cell search, cell selection, radio resource management (RRM), RRM report, and the like of terminals. The DRS may basically include an SS/PBCH block. In addition, the DRS may further include a CORESET (or a PDCCH search space associated with a CORESET), a PDSCH, and/or a CSI-RS in addition to the SS/PBCH block. For example, the DRS may include a CORESET #0 (i.e., CORESET with a CORESET ID of 0) and a PDCCH search space set #0 (i.e., search space set with a search space set ID of 0) that is associated with the CORESET #0. DCI (e.g., DCI scheduling a PDSCH including SIB 1) may be transmitted through a PDCCH candidate in a resource of the PDCCH search space set #0 associated with the CORESET #0.

The application of the methods and exemplary embodiments may be limited to specific channel(s) (e.g., specific LBT subband(s), specific subband(s), specific RB set(s), specific bandwidth part(s), specific carrier(s), or the like).

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. An operation method of a terminal in a communication system, the operation method comprising:
receiving, from a base station, first configuration information of first fixed frame periods (FFPs) for channel access of the terminal and second configuration information of second FFPs for channel access of the base station;
initiating a first channel occupancy time (COT) in at least one first FFP among the first FFPs indicated by the first configuration information;
determining one COT according to a predefined rule from among the first COT and a second COT initiated by the base station in at least one second FFP among the second FFPs; and
transmitting an uplink signal to the base station in the one COT.

2. The operation method according to claim 1, wherein a period in which the uplink signal is transmitted is included in the first COT initiated by the terminal, and the uplink signal is transmitted based on the first COT.

3. The operation method according to claim 2, wherein the uplink signal is included in the second COT initiated by the base station, and the first COT overlaps the second COT.

4. The operation method according to claim 2, wherein the uplink signal is a configured grant (CG) physical uplink shared channel (PUSCH), and the uplink signal is allocated in a period excluding a first symbol in the first COT.

5. The operation method according to claim 2, wherein the uplink signal is one PUSCH constituting repetitive PUSCH transmission or one physical uplink control channel (PUCCH) constituting repetitive PUCCH transmission.

6. The operation method according to claim 2, wherein the period in which the uplink signal is transmitted within the first COT includes an idle period of the at least one second FFP to which the second COT belongs.

7. The operation method according to claim 1, wherein the predefined rule includes receiving downlink control information (DCI) indicating the one COT from the base station or a rule negotiated in advance between the terminal and the base station.

8. The operation method according to claim 1, wherein the first configuration information includes information indicating a first periodicity of the first FFPs, the second configuration information includes information indicating a second periodicity of the second FFPs, and the first periodicity is an integer factor or an integer multiple of the second periodicity.

9. The operation method according to claim 1, wherein the first configuration information includes a time offset for the first FFPs, the first FFPs are periodically repeated, a position of the first FFPs are determined by the time offset, and the time offset is a number of symbols between a start time of a radio frame and a start time of one of the first FFPs.

10. The operation method according to claim 9, wherein the number of symbols is smaller than a number of symbols corresponding to the first periodicity of the first FFPs, and the number of symbols is determined based on a numerology of a bandwidth part configured in a carrier.

11. The operation method according to claim 1, wherein the first configuration information and the second configuration information are included in a radio resource control (RRC) message transmitted to the terminal.

12. An operation method of a base station in a communication system, the operation method comprising:
generating first configuration information of first fixed frame periods (FFPs) for channel access of a terminal and second configuration information of second FFPs for channel access of the base station;
transmitting the first configuration information and the second configuration information to the terminal;
initiating a second channel occupancy time (COT) in at least one second FFP among the second FFPs; and
receiving an uplink signal from the terminal in one COT determined according to a predefined rule from among the second COT and a first COT initiated by the terminal in at least one first FFP among the first FFPs.

13. The operation method according to claim 12, wherein a period in which the uplink signal is transmitted is included in the first COT initiated by the terminal, and the uplink signal is received based on the first COT.

14. The operation method according to claim 13, wherein the uplink signal is included in the second COT initiated by the base station, and the first COT overlaps the second COT.

15. The operation method according to claim 13, wherein the uplink signal is a configured grant (CG) physical uplink shared channel (PUSCH), and the uplink signal is allocated in a period excluding a first symbol in the first COT.

16. The operation method according to claim 13, wherein the uplink signal is one PUSCH constituting repetitive PUSCH transmission or one physical uplink control channel (PUCCH) constituting repetitive PUCCH transmission.

17. The operation method according to claim 12, wherein the predefined rule includes that the base station transmits downlink control information (DCI) indicating the one COT to the terminal or a rule negotiated in advance between the terminal and the base station.

18. The operation method according to claim 12, wherein the first configuration information includes information indicating a first periodicity of the first FFPs, the second configuration information includes information indicating a second periodicity of the second FFPs, and the first periodicity is an integer factor or an integer multiple of the second periodicity.

19. The operation method according to claim 12, wherein the first configuration information includes a time offset for the first FFPs, the first FFPs are periodically repeated, a position of the first FFPs are determined by the time offset, and the time offset is a number of symbols between a start time of a radio frame and a start time of one of the first FFPs.

20. The operation method according to claim 19, wherein the number of symbols is smaller than a number of symbols corresponding to the first periodicity of the first FFPs, and the number of symbols is determined based on a numerology of a bandwidth part configured in a carrier.
